# EUROPEAN PATENT APPLICATION

(11) **EP 4 851 032 A1**
(43) Date of publication of application: **09.12.2026**
(21) Application number: 25867320.1
(22) Date of filing: 22.01.2025
(51) Int. Cl.: B62M 6/40

(54) **POWER ASSIST UNIT AND VEHICLE**

(71) Applicant: SZ Shanzhi Technology Co., Ltd., Shenzhen, Guangdong 518000 (CN)
(72) Inventor: QIAO, Guangyuan, Shenzhen, Guangdong 518000 (CN); ZHOU, Chengke, Shenzhen, Guangdong 518000 (CN); DU, Qiuchen, Shenzhen, Guangdong 518000 (CN); WANG, Fengchun, Shenzhen, Guangdong 518000 (CN); FAN, Pengcheng, Shenzhen, Guangdong 518000 (CN); BIN, Peng, Shenzhen, Guangdong 518000 (CN)
(74) Representative: Appelt, Christian W.
(86) International application number: PCT/CN2025/073884
(87) International publication number: WO 2026/156521

(57) **Abstract**

An assist unit (100) and a vehicle using the assist unit (100), including a power output shaft (12), a power input shaft (14), a speed regulation power device (16), and an assist power device (18). The power output shaft (12) is configured to output power. The power input shaft (14) is configured to receive power input from a power input device (26) and transmit the power to the power output shaft (12). The speed regulation power device (16) is connected to the power output shaft (12) through a first transmission mechanism (20) and is configured to regulate a rotation speed of the power output shaft (12). The assist power device (18) is connected to the first transmission mechanism (20) through a second transmission mechanism (22) and is configured to provide assist power to the power output shaft (12). When related information of power to be output of the speed regulation power device (16) exceeds a preset threshold, the assist power device (18) drives the speed regulation power device (16) to rotate through a compensation transmission mechanism (24).

## Description

### TECHNICAL FIELD

The present disclosure relates to the technical field of vehicles, and in particular relates to an assist unit and a vehicle.

### BACKGROUND

In related technologies, for an electric assist bicycle, when a user steps hard on a pedal, causing the assist unit to output large torque, the speed regulation power device needs to generate very large torque. At this time, because the motor output of the speed regulation power device is saturated and cannot output larger torque, the pedal feel of the user stepping on the pedal becomes a soft pedal feel, and the experience is relatively poor.

### SUMMARY

In a first aspect, embodiments of the present disclosure provide an assist unit. The assist unit includes:
a power output shaft, configured to output power;
a power input shaft, configured to receive power input of a power input device and transmit the power to the power output shaft;
a speed regulation power device connected to the power output shaft through a first transmission mechanism and configured to regulate a rotation speed of the power output shaft; and
an assist power device connected to the first transmission mechanism through a second transmission mechanism and configured to provide assist power to the power output shaft,
where the assist power device is connected to the speed regulation power device through a compensation transmission mechanism,
when related information of power to be output of the speed regulation power device exceeds a preset threshold, the assist power device is capable of driving the speed regulation power device to rotate through the compensation transmission mechanism.

In the above assist unit, the assist power device is capable of driving the speed regulation power device to rotate through the compensation transmission mechanism, thereby compensating for insufficient output of the speed regulation power device and improving or eliminating the problem of soft pedal feel.

In some embodiments, the related information of power to be output of the speed regulation power device includes at least one of the following: a magnitude of torque to be output of the speed regulation power device, a magnitude of power to be output of the speed regulation power device, and a magnitude of energy to be supplied of the speed regulation power device.

In some embodiments, the magnitude of energy to be supplied of the speed regulation power device includes at least one of the following: a magnitude of current to be supplied of the speed regulation power device.

In some embodiments, the related information of power to be output of the speed regulation power device exceeding a preset threshold includes at least one of the following:
the torque to be output of the speed regulation power device is greater than a preset torque threshold;
the power to be output of the speed regulation power device is greater than a preset power threshold;
the current to be supplied of the speed regulation power device is greater than a preset current threshold.

In some embodiments, an operating mode of the assist unit includes a shifting mode and a fixed gear mode. When the assist power device drives the speed regulation power device to rotate through the compensation transmission mechanism, the assist unit is in the fixed gear mode. When the transmission connection through which the assist power device drives the speed regulation power device through the compensation transmission mechanism is disconnected, the assist unit is in the shifting mode.

In some embodiments, in response to the assist unit satisfying a preset condition, the assist unit switches from the fixed gear mode to the shifting mode.

In some embodiments, in response to the assist unit satisfying the preset condition includes: in response to the operating state of the speed regulation power device satisfying a

In some embodiments, in response to the operating state of the speed regulation power device satisfying the preset condition includes at least one of the following: in response to the output torque of the speed regulation power device being less than or equal to a preset torque value, and in response to the rotation speed of the speed regulation power device being greater than or equal to a preset speed value.

In some embodiments, the assist unit further includes a switch device, and the switch device is configured to conduct or disconnect the transmission connection through which the assist power device drives the speed regulation power device to rotate through the compensation transmission mechanism.

In some embodiments, the switch device includes a clutch. In response to the assist unit satisfying the preset condition, the clutch automatically disconnects the transmission connection through which the assist power device drives the speed regulation power device to rotate through the compensation transmission mechanism.

In some embodiments, the clutch includes a one-way bearing.

In some embodiments, the one-way bearing is connected to the output shaft of the speed regulation power device, and the compensation transmission mechanism is connected to the power input shaft through the one-way bearing.

In some embodiments, when the assist unit is in the fixed gear mode, a transmission ratio between power input and power output of the assist unit is a constant value.

In some embodiments, when the assist unit is in the shifting mode, the transmission ratio between power input and power output of the assist unit varies with the rotation speed of the speed regulation power device.

In some embodiments, when the assist unit is in the shifting mode, a gear of the assist unit increases as the rotation speed of the speed regulation power device increases.

In some embodiments, the compensation transmission mechanism includes at least one of the following: a mechanical transmission mechanism, a hydraulic transmission mechanism, a magnetic transmission mechanism, a hydrodynamic transmission mechanism, and an electromagnetic transmission mechanism.

In some embodiments, the mechanical transmission mechanism includes at least one of the following: a gear transmission mechanism, a wheel transmission mechanism, and a worm-gear transmission mechanism.

In some embodiments, the wheel transmission mechanism includes two transmission wheels and a connection member, where one transmission wheel is connected to an output shaft of the speed regulation power device, another transmission wheel is connected to an output shaft of the assist power device, and the connection member is connected to the two transmission wheels to drive the two transmission wheels to rotate together.

In some embodiments, the transmission wheel includes at least one of the following: a pulley and a sprocket.

The connection member includes at least one of the following: a belt and a chain.

In some embodiments, the first transmission mechanism includes a gear transmission mechanism . The gear transmission mechanism includes a plurality of gear members, where the output shaft of the speed regulation power device is connected to one of the gear members, and the power output shaft is connected to another one of the gear members.

In some embodiments, the gear transmission mechanism includes a planetary gear transmission mechanism. The planetary gear transmission mechanism includes a sun gear, a ring gear, a planetary gear set, and a planet carrier. The sun gear is arranged within the ring gear. The planetary gear set is arranged between an inner ring of the ring gear and an outer ring of the sun gear, and the planetary gear set simultaneously meshes with the ring gear and the sun gear. The planet carrier is connected to a middle portion of planetary gears of the planetary gear set. When the planetary gears rotate, the planet carrier is driven to rotate.

In some embodiments, the planetary gear set includes multiple groups of planetary gears. One group of the planetary gears meshes with the sun gear, and another group of the planetary gears meshes with the ring gear.

In some embodiments, a number of teeth of one group of the planetary gears is the same as or different from a number of teeth of another group of the planetary gears.

In some embodiments, the output shaft of the speed regulation power device is connected to the sun gear or the planet carrier.

In some embodiments, the power output shaft is connected to the planet carrier or the sun gear.

In some embodiments, the ring gear is connected to the power input shaft through the third transmission mechanism.

In some embodiments, one of the sun gear or the planet carrier is connected to the output shaft of the speed regulation power device, and the other is connected to the power output shaft.

In some embodiments, the ring gear is connected to the second transmission mechanism through the fourth transmission mechanism.

In some embodiments, the second transmission mechanism includes a gear transmission mechanism. The gear transmission mechanism includes a plurality of gear members, where the output shaft of the assist power device is connected to one of the gear members, and the first transmission mechanism is connected to another gear member.

In some embodiments, the gear transmission mechanism includes a planetary gear transmission mechanism. The planetary gear transmission mechanism includes a sun gear, a ring gear, a planetary gear set, and a planet carrier.

The sun gear is arranged within the ring gear. The planetary gear set is arranged between an inner ring of the ring gear and an outer ring of the sun gear, and the planetary gear set simultaneously meshes with the ring gear and the sun gear.

The planet carrier is connected to a middle portion of the planetary gears of the planetary gear set. When the planetary gears rotate, the planet carrier is driven to rotate.

In some embodiments, the planetary gear set includes multiple groups of planetary gears. One group of the planetary gears meshes with the sun gear, and another group of the planetary gears meshes with the ring gear.

In some embodiments, a number of teeth of one group of the planetary gears is the same as or different from a number of teeth of another group of the planetary gears.

In some embodiments, the output shaft of the assist power device is connected to the sun gear or the planet carrier.

In some embodiments, the first transmission mechanism is connected to the planet carrier or the sun gear.

In some embodiments, the ring gear is fixed and does not rotate.

In some embodiments, one of the sun gear or the planet carrier is connected to the output shaft of the assist power device, and the other is connected to the first transmission mechanism.

In some embodiments, the assist unit further includes a third transmission mechanism. The power input shaft drives one component of the first transmission mechanism to rotate through the third transmission mechanism.

In some embodiments, the third transmission mechanism includes at least one of the following: a mechanical transmission mechanism, a hydraulic transmission mechanism, a magnetic transmission mechanism, a hydrodynamic transmission mechanism, and an electromagnetic transmission mechanism.

In some embodiments, the mechanical transmission mechanism includes at least one of the following: a gear transmission mechanism, a wheel transmission mechanism, and a worm-gear transmission mechanism.

In some embodiments, the wheel transmission mechanism includes two transmission wheels and a transmission member. One transmission wheel is connected to the power input shaft, another transmission wheel is connected to the first transmission mechanism, and the transmission member is connected to the two transmission wheels to drive the two transmission wheels to rotate together.

In some embodiments, the transmission wheel includes at least one of the following: a pulley and a sprocket.

The transmission member includes at least one of the following: a belt and a chain.

In some embodiments, the assist unit further includes a fourth transmission mechanism, and the second transmission mechanism drives one component of the first transmission mechanism to rotate through the fourth transmission mechanism.

In some embodiments, the fourth transmission mechanism includes at least one of the following: a mechanical transmission mechanism, a hydraulic transmission mechanism, a magnetic transmission mechanism, a hydrodynamic transmission mechanism, and an electromagnetic transmission mechanism.

In some embodiments, the mechanical transmission mechanism includes at least one of the following: a gear transmission mechanism, a wheel transmission mechanism, and a worm-gear transmission mechanism.

In some embodiments, the wheel transmission mechanism includes two transmission wheels and a transmission member, where one transmission wheel is connected to the second transmission mechanism, another transmission wheel is connected to the first transmission mechanism, and the transmission member is connected to the two transmission wheels to drive the two transmission wheels to rotate together.

In some embodiments, the transmission wheel includes at least one of the following: a pulley and a sprocket.

The transmission member includes at least one of the following: a belt and a chain.

In some embodiments, the assist unit further includes a clutch. The power input shaft drives one component of the first transmission mechanism to rotate through the third transmission mechanism, and the clutch is configured to disconnect or conduct a transmission connection through which the power input shaft drives one component of the first transmission mechanism to rotate through the third transmission mechanism.

In some embodiments, the clutch includes a one-way bearing.

In some embodiments, the one-way bearing is connected to the power input shaft, and the third transmission mechanism is connected to the power input shaft through the one-way bearing.

In some embodiments, when a speed of the third transmission mechanism is greater than a speed of the power input shaft, the one-way bearing disconnects the transmission connection through which the power input shaft drives one component of the first transmission mechanism to rotate through the third transmission mechanism.

In some embodiments, an output shaft of the assist power device is a hollow shaft, and the power input shaft is disposed through the output shaft of the assist power device.

In some embodiments, the output shaft of the assist power device is capable of rotating relative to the power input shaft.

In some embodiments, a bearing is provided between the output shaft of the assist power device and the power input shaft.

In some embodiments, the assist power device and at least some components of the second transmission mechanism are arranged along an extending direction of the power input shaft.

In some embodiments, at least some components of the second transmission mechanism are sleeved on the power input shaft.

In some embodiments, the assist power device is sleeved on the power input shaft.

In some embodiments, the output shaft of the assist power device and the power input shaft are coaxially arranged.

In some embodiments, the speed regulation power device and at least some components of the first transmission mechanism are arranged along an extending direction of the power output shaft.

In some embodiments, at least some components of the first transmission mechanism are sleeved on an extension line of the power output shaft.

In some embodiments, the output shaft of the speed regulation power device and the power output shaft are coaxially arranged.

In some embodiments, a rotation speed of the power output shaft increases as a rotation speed of the speed regulation power device and/or a rotation speed of the power input shaft increases.

In some embodiments, the rotation speed of the speed regulation power device is regulated based on the rotation speed of the power input shaft.

In some embodiments, torque of the power output shaft increases as torque of the assist power device and torque of the power input shaft increase.

In some embodiments, torque of the assist power device is regulated based on torque of the power input shaft.

In some embodiments, the power input shaft and the power output shaft are arranged spaced apart in a direction perpendicular to the power output shaft.

In some embodiments, an extending direction of the power input shaft is substantially parallel to an extending direction of the power output shaft.

In some embodiments, the assist unit further includes a power input device, and the power input device is coaxially connected to the power input shaft.

In some embodiments, the power input device includes at least one of the following: a motor, an engine, and a pedal crank mechanism.

In some embodiments, the power input device is fixedly connected to the power input shaft.

In some embodiments, the speed regulation power device includes at least one of the following: a motor and an engine.

In some embodiments, the assist power device includes at least one of the following: a motor and an engine.

In some embodiments, the vehicle to which the assist unit is applied is an electric assist bicycle, an electric motorcycle, or an electric vehicle.

In a second aspect, embodiments of the present disclosure provide a vehicle. The vehicle includes:
a power input device; and
the assist unit according to any of the above embodiments, where the assist unit is connected to the power input device and is configured to regulate power input from the power input device.

In the above vehicle, the assist power device is capable of driving the speed regulation power device to rotate through the compensation transmission mechanism, thereby compensating for insufficient output of the speed regulation power device and improving or eliminating the problem of soft pedal feel.

Additional aspects and advantages of the embodiments of the present disclosure will be partially set forth in the following description, and will partially become apparent from the following description, or may be learned through practice of the embodiments of the present disclosure.

### BRIEF DESCRIPTION OF THE DRAWINGS

The above and/or additional aspects and advantages of the present disclosure will become apparent and readily understood from the following description of embodiments in conjunction with the accompanying drawings, where:
FIG. 1 is a schematic module diagram of an assist unit according to embodiments of the present disclosure;
FIG. 2 is a schematic structural diagram of an assist unit according to embodiments of the present disclosure;
FIG. 3 is a schematic exploded diagram of an assist unit according to embodiments of the present disclosure;
FIG. 4 is a schematic structural diagram of an assist unit according to embodiments of the present disclosure;
FIG. 5 is another schematic exploded diagram of an assist unit according to embodiments of the present disclosure;
FIG. 6 is a schematic sectional diagram of an assist unit according to embodiments of the present disclosure;
FIG. 7 is a schematic module diagram of a vehicle according to embodiments of the present disclosure.

Explanation of main element reference numerals:
assist unit 100, power output shaft 12, power input shaft 14, speed regulation power device 16, assist power device 18, first transmission mechanism 20, second transmission mechanism 22, compensation transmission mechanism 24, switch device 28, one-way bearing 30, transmission wheel 32, transmission member 34, first sun gear 36, first ring gear 38, first planetary gear set 40, first planet carrier 42, third transmission mechanism 44, fourth transmission mechanism 46, second sun gear 48, second ring gear 50, second planetary gear set 52, second planet carrier 54, clutch 56, vehicle 10, power input device 200, traveling device 300.

### DETAILED DESCRIPTION OF THE EMBODIMENTS

Embodiments of the present disclosure are described in detail below. Examples of the embodiments are illustrated in the accompanying drawings, where identical or similar reference numerals throughout indicate identical or similar elements or elements having identical or similar functions. The embodiments described below with reference to the accompanying drawings are exemplary and are only used to explain the present disclosure, and should not be understood as limiting the present disclosure.

In the description of the present disclosure, it should be understood that the terms "center," "longitudinal," "transverse," "length," "width," "thickness," "upper," "lower," "front," "rear," "left," "right," "vertical," "horizontal," "top," "bottom," "inner," "outer," "clockwise," "counterclockwise," and the like indicating orientations or positional relationships are based on the orientations or positional relationships shown in the drawings, and are only for convenience of describing the present disclosure and simplifying the description, rather than indicating or implying that the indicated device or element must have a specific orientation or be constructed and operated in a specific orientation. Therefore, these terms should not be understood as limiting the present disclosure. In addition, the terms "first" and "second" are used only for descriptive purposes and should not be understood as indicating or implying relative importance or implicitly indicating the number of indicated technical features. Thus, a feature defined as "first" or "second" may explicitly or implicitly include one or more of the feature. In the description of the present disclosure, "multiple" means two or more unless otherwise specifically defined.

In the description of the present disclosure, it should be noted that unless otherwise expressly specified and defined, the terms "mount," "connect," and "couple" should be understood in a broad sense. For example, the connection may be a fixed connection, a detachable connection, or an integral connection. The connection may be a mechanical connection or an electrical connection. The connection may be a direct connection or an indirect connection through an intermediate medium. The connection may be internal communication between two elements or an interaction relationship between two elements. For a person of ordinary skill in the art, the specific meanings of the above terms in the present disclosure may be understood according to specific circumstances.

In the present disclosure, unless otherwise expressly specified and defined, a first feature being "on" or "under" a second feature may include the first feature and the second feature being in direct contact, and may also include the first feature and the second feature not being in direct contact but contacting through another feature between them. Moreover, the first feature being "above," "over," or "on" the second feature includes the first feature being directly above or obliquely above the second feature, or simply indicating that a horizontal height of the first feature is higher than that of the second feature. The first feature being "below," "under," or "beneath" the second feature includes the first feature being directly below or obliquely below the second feature, or simply indicating that the horizontal height of the first feature is lower than that of the second feature.

The foregoing disclosure provides many different embodiments or examples for implementing different structures of the present disclosure. In order to simplify the disclosure of the present disclosure, descriptions of components and arrangements of specific examples are provided above. Of course, these are merely examples and are not intended to limit the present disclosure. In addition, the present disclosure may repeat reference numerals and/or reference letters in different examples, and such repetition is for the purpose of simplicity and clarity, and does not itself indicate a relationship between the various embodiments and/or arrangements discussed. Furthermore, the present disclosure provides examples of various specific processes and materials, but a person of ordinary skill in the art may recognize the use of other processes and/or other materials.

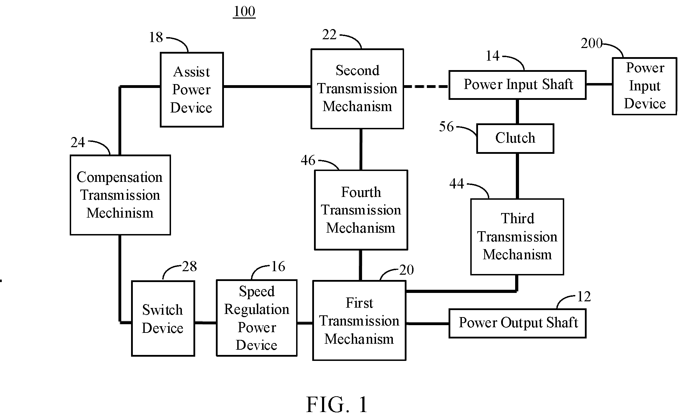

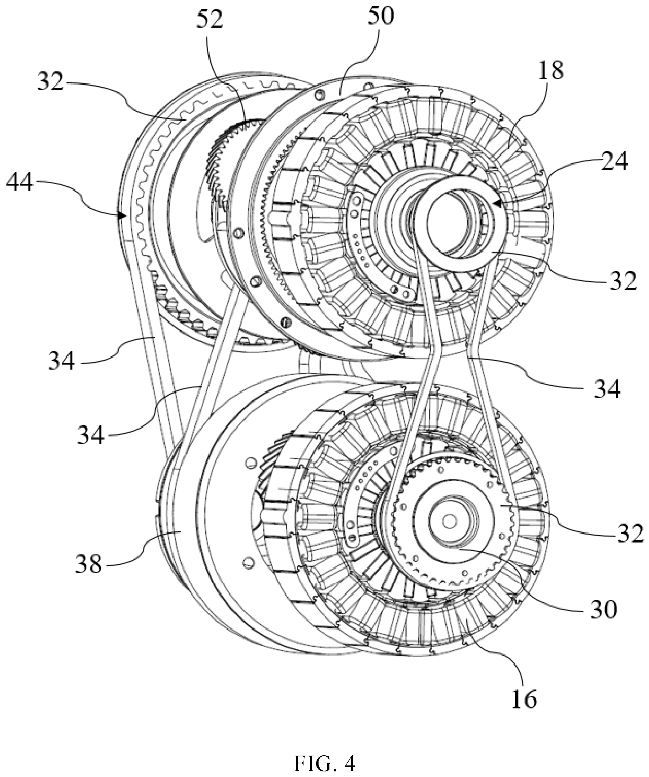

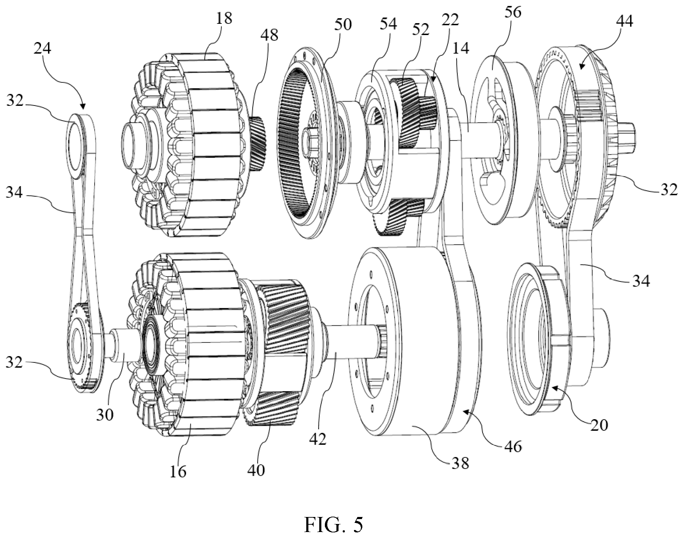

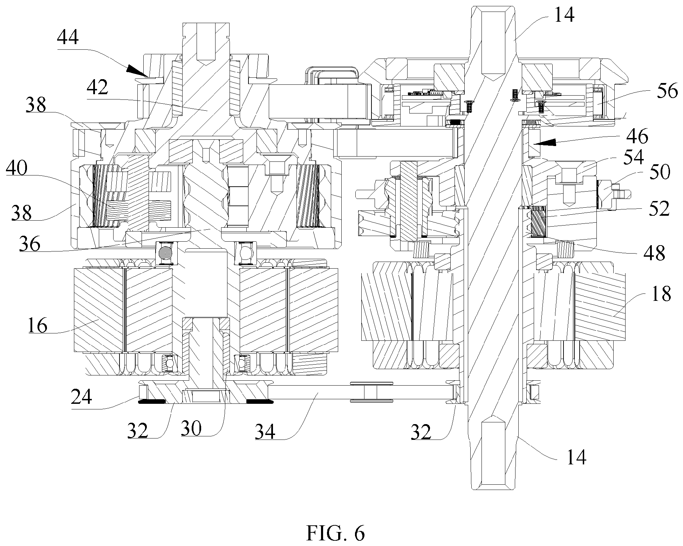

In a first aspect, referring to FIGs. 1 to 6, embodiments of the present disclosure provide an assist unit 100. The assist unit 100 includes a power output shaft 12, a power input shaft 14, a speed regulation power device 16, and an assist power device 18. The power output shaft 12 is configured to output power. The power input shaft 14 is configured to receive power input from the power input device 200 and transmit the power to the power output shaft 12. The speed regulation power device 16 is connected to the power output shaft 12 through the first transmission mechanism 20 and is configured to regulate the rotation speed of the power output shaft 12. The assist power device 18 is connected to the first transmission mechanism 20 through the second transmission mechanism 22 and is configured to provide assist power to the power output shaft 12.

Where the assist power device 18 is connected to the speed regulation power device 16 through the compensation transmission mechanism 24. When related information of power to be output of the speed regulation power device 16 exceeds a preset threshold, the assist power device 18 is capable of driving the speed regulation power device 16 to rotate through the compensation transmission mechanism 24.

In the above assist unit 100, the assist power device 18 is capable of driving the speed regulation power device 16 to rotate through the compensation transmission mechanism 24, thereby compensating for insufficient output of the speed regulation power device 16 and improving or eliminating the problem of soft pedal feel.

Further, the assist power device 18 transmits torque to the speed regulation power device 16 through the compensation transmission mechanism 24, and the speed regulation power device 16 can be further reduced in size, so that the assist unit 100 becomes more compact and lighter in weight.

Specifically, the assist unit 100 may be responsible for providing additional power assistance. The power output shaft 12 is configured to output power, and the power output shaft 12 may be connected to a wheel so that the power drives the wheel to rotate, thereby driving the vehicle to travel.

The power input shaft 14 is configured to receive power input from the power input device 200. In some embodiments, the power input device 200 may include at least one of the following: a motor, an engine, and a pedal crank mechanism. In some embodiments, the vehicle may be an electric vehicle, and the electric vehicle includes a pure electric vehicle, a hybrid vehicle, an extended-range electric vehicle, or the like. The electric vehicle includes a motor, and an output shaft of the motor may be connected to the power input shaft 14. When the motor operates, the output shaft can drive the power input shaft 14 to rotate, so that the power input shaft 14 receives power input from the motor and transmits the power to the power output shaft 12, thereby driving the vehicle to travel.

In some embodiments, the vehicle may be a fuel vehicle, and the fuel vehicle includes a pure fuel vehicle, a hybrid vehicle, or the like. The fuel vehicle includes an engine, and an output shaft of the engine may be connected to the power input shaft 14. When the engine operates, the output shaft can drive the power input shaft 14 to rotate, so that the power input shaft 14 receives power input from the engine and transmits the power to the power output shaft 12, thereby driving the vehicle to travel.

In some embodiments, the vehicle may be an electric assist bicycle. The electric assist bicycle includes a pedal crank mechanism, and the pedal crank mechanism may include a crankshaft and a pedal. The pedal is connected to the power input shaft 14 through the crankshaft. When a rider steps on the pedal, the crankshaft can be driven to rotate, thereby driving the power input shaft 14 to rotate, so that the power input shaft 14 receives power input from the pedal crank mechanism and transmits the power to the power output shaft 12, thereby driving the vehicle to travel.

The speed regulation power device 16 is connected to the power output shaft 12 through the first transmission mechanism 20 and is configured to regulate the rotation speed of the power output shaft 12. Specifically, when the speed regulation power device 16 operates, it can drive the first transmission mechanism 20 to move, thereby driving the power output shaft 12 to rotate so as to regulate the rotation speed of the power output shaft 12. The transmission ratio of the first transmission mechanism 20 may be fixed or variable. In some embodiments, the speed regulation power device 16 may include a speed regulation motor, and the rotation speed of the speed regulation motor is adjustable so as to regulate the rotation speed of the power output shaft 12. The speed regulation power device 16 may change the speed of the power output shaft 12 through the first transmission mechanism 20.

The assist power device 18 is connected to the first transmission mechanism 20 through the second transmission mechanism 22 and is configured to provide assist power to the power output shaft 12. Thus, the assist power device 18 and the power input device 200 can jointly output power to provide greater power to the power output shaft 12, or reduce the output load of the power input device 200 while providing unchanged power to the power output shaft 12. In some embodiments, the assist power device 18 may include an assist motor, and the rotation speed of the assist motor is adjustable to adapt to different power needs. The assist motor can be used to compensate for insufficient power of the power input shaft 14 so that the power input device 200 (such as human power) remains in a comfortable output torque state. In some embodiments, the assist power device 18 may achieve speed reduction through the second transmission mechanism 22.

The assist power device 18 is connected to the speed regulation power device 16 through the compensation transmission mechanism 24. When related information of power to be output of the speed regulation power device 16 exceeds a preset threshold, the assist power device 18 is capable of driving the speed regulation power device 16 to rotate through the compensation transmission mechanism 24. Specifically, the compensation transmission mechanism 24 can output power of the assist power device 18 to the speed regulation power device 16, so that when the related information of power to be output of the speed regulation power device 16 exceeds the preset threshold, the speed regulation power device 16 is driven to rotate so as to compensate for insufficient power of the speed regulation power device 16. Thus, the problem of soft pedal feel caused by insufficient output of the speed regulation power device 16 can be mitigated to a certain extent. Further, the speed regulation power device 16 does not need to be made larger, and a structurally compact assist unit 100 can be achieved, which is beneficial to the miniaturized design of the assist unit 100.

In related technologies, when a rider strongly steps on the pedal of an electric assist bicycle, the speed regulation motor requires a very large torque. At this time, when the output of the speed regulation motor is saturated and cannot output a larger torque, layered structures inside the mechanical structure are likely to become softened, resulting in a soft pedal feel. In the embodiments of the present disclosure, the assist power device 18 is capable of driving the speed regulation power device 16 to rotate through the compensation transmission mechanism 24, thereby compensating for insufficient output of the speed regulation power device 16 and improving or eliminating the problem of soft pedal feel.

Optionally, in some embodiments, the preset threshold may include but is not limited to a threshold of the speed regulation power device 16 under a rated power operating state, a threshold preset by a manufacturer of the assist unit 100, a threshold set by a user, or the like.

In some embodiments, the related information of power to be output of the speed regulation power device 16 includes at least one of the following: a magnitude of torque to be output of the speed regulation power device 16, a magnitude of power to be output of the speed regulation power device 16, and a magnitude of energy to be supplied of the speed regulation power device 16.

Thus, the speed regulation power device 16 can adapt to more application scenarios.

Specifically, in some embodiments, the related information of power to be output of the speed regulation power device 16 includes a magnitude of torque to be output of the speed regulation power device 16, a magnitude of power to be output of the speed regulation power device 16, or a magnitude of energy to be supplied of the speed regulation power device 16.

For example, when the magnitude of torque to be output of the speed regulation power device 16 exceeds a preset torque threshold, the assist power device 18 is capable of driving the speed regulation power device 16 to rotate through the compensation transmission mechanism 24. When the magnitude of power to be output of the speed regulation power device 16 exceeds a preset power threshold, the assist power device 18 is capable of driving the speed regulation power device 16 to rotate through the compensation transmission mechanism 24. When the magnitude of energy to be supplied of the speed regulation power device 16 exceeds a preset energy supply threshold, the assist power device 18 is capable of driving the speed regulation power device 16 to rotate through the compensation transmission mechanism 24.

In some embodiments, the related information of power to be output of the speed regulation power device 16 includes any one or any two of the following: a magnitude of torque to be output of the speed regulation power device 16, a magnitude of power to be output of the speed regulation power device 16, and a magnitude of energy to be supplied of the speed regulation power device 16.

In some embodiments, the magnitude of energy to be supplied of the speed regulation power device 16 includes a magnitude of current to be supplied of the speed regulation power device 16.

Thus, when the magnitude of the current exceeds a preset current threshold, the assist power device 18 is capable of driving the speed regulation power device 16 to rotate through the compensation transmission mechanism 24.

Specifically, the current to be supplied may be a current determined according to torque needed to be output by the speed regulation power device 16. When the current to be supplied exceeds the preset current threshold, it indicates that the speed regulation power device 16 cannot satisfy the needed output torque. Therefore, the assist power device 18 is capable of driving the speed regulation power device 16 to rotate through the compensation transmission mechanism 24 so as to compensate for the inability of the speed regulation power device 16 to output a larger torque due to saturated output, thereby improving the problem of soft pedal feel.

Further, the assist power device 18 transmits torque to the speed regulation power device 16 through the compensation transmission mechanism 24, and the speed regulation power device 16 can be further reduced in size, so that the assist unit 100 becomes more compact and lighter in weight.

In some embodiments, the related information of power to be output of the speed regulation power device 16 exceeding a preset threshold includes at least one of the following:
the torque to be output of the speed regulation power device 16 is greater than a preset torque threshold;
the power to be output of the speed regulation power device 16 is greater than a preset power threshold;
the current to be supplied of the speed regulation power device 16 is greater than a preset current threshold.

Thus, specific conditions under which the assist power device 18 drives the speed regulation power device 16 to rotate through the compensation transmission mechanism 24 can be determined.

Specifically, in some embodiments, the related information of power to be output of the speed regulation power device 16 exceeding the preset threshold includes: the torque to be output of the speed regulation power device 16 being greater than the preset torque threshold; the power to be output of the speed regulation power device 16 being greater than the preset power threshold; and the current to be supplied of the speed regulation power device 16 being greater than the preset current threshold.

The preset torque threshold, the preset power threshold, and the preset current threshold may be preset and stored in the assist unit 100 or the vehicle, and may be specifically determined by means including but not limited to simulation, testing, empirical values, or the like. The torque to be output may be torque determined according to torque needed to be output by the speed regulation power device 16. The power to be output may be power determined according to torque needed to be output by the speed regulation power device 16. The current to be supplied may be current determined according to torque needed to be output by the speed regulation power device 16.

During operation of the assist unit 100, when any one of the following occurs: the torque to be output of the speed regulation power device 16 is greater than the preset torque threshold, the power to be output of the speed regulation power device 16 is greater than the preset power threshold, or the current to be supplied of the speed regulation power device 16 is greater than the preset current threshold, the assist power device 18 is capable of driving the speed regulation power device 16 to rotate through the compensation transmission mechanism 24, so that the assist unit 100 can satisfy torque needs of the power input shaft 14, thereby improving the problem of soft pedal feel.

Further, the assist power device 18 transmits torque to the speed regulation power device 16 through the compensation transmission mechanism 24, and the speed regulation power device 16 can be further reduced in size, so that the assist unit 100 becomes more compact and lighter in weight.

In some embodiments, the related information of power to be output of the speed regulation power device 16 exceeding the preset threshold includes any one or any two of the following: the torque to be output of the speed regulation power device 16 is greater than the preset torque threshold; the power to be output of the speed regulation power device 16 is greater than the preset power threshold; the current to be supplied of the speed regulation power device 16 is greater than the preset current threshold.

The preset torque threshold, the preset power threshold, and the preset current threshold may be specifically determined according to needs, performance, and other factors, and the present disclosure does not limit this.

In some embodiments, an operating mode of the assist unit 100 includes a shifting mode and/or a fixed gear mode. When the assist power device 18 drives the speed regulation power device 16 to rotate through the compensation transmission mechanism 24, the assist unit 100 is in the fixed gear mode. When the transmission connection through which the assist power device 18 drives the speed regulation power device 16 to rotate through the compensation transmission mechanism 24 is disconnected, the assist unit 100 is in the shifting mode.

Thus, the soft pedal feel and jerking sensation caused by sudden gear changes during mode switching can be eliminated.

Further, the assist power device 18 transmits torque to the speed regulation power device 16 through the compensation transmission mechanism 24, and the speed regulation power device 16 can be further reduced in size, so that the assist unit 100 becomes more compact and lighter in weight.

Specifically, in some embodiments, the speed regulation power device 16 may include a speed regulation motor, and the assist power device 18 may include an assist motor. Maximum torque needs of the speed regulation motor and the assist motor occur at different times.

In some embodiments, the fixed gear mode may be a mode in which the transmission ratio of the assist unit 100 is fixed, for example, a mode in which a rotation speed ratio from input to output is fixed. Optionally, in the fixed gear mode, torque of the speed regulation motor is rated torque or maximum torque. The torque is related to the rotation speed of the speed regulation motor. That is, in the fixed gear mode, the rotation speed of the speed regulation motor is fixed and unchanged. When the torque to be output of the speed regulation motor exceeds the preset torque threshold, for example, when the output of the speed regulation motor is insufficient, it indicates that the speed regulation motor cannot satisfy torque needs of the power output shaft 12. The assist power device 18 is capable of driving the speed regulation motor to rotate through the compensation transmission mechanism 24, so that torque of the assist motor can be transmitted to the speed regulation motor through the compensation transmission mechanism 24, thereby eliminating to a certain extent the soft pedal feel caused by sudden gear changes during mode switching.

In some embodiments, the shifting mode may be a mode in which the transmission ratio of the assist unit 100 is variable, for example, a mode in which the rotation speed ratio from input to output is variable. Optionally, in the shifting mode, torque of the speed regulation motor may change continuously. The torque is related to the rotation speed of the speed regulation motor. That is, in the shifting mode, the rotation speed of the speed regulation motor can change continuously to achieve continuously variable transmission, thereby eliminating to a certain extent the jerking sensation caused by sudden gear changes during mode switching. When the transmission connection through which the assist power device 18 drives the speed regulation motor to rotate through the compensation transmission mechanism 24 is disconnected, the assist unit 100 may be in the shifting mode, and the rotation speed of the speed regulation motor can adapt to torque needs of the power output shaft 12 without requiring the assist power device 18 to drive the speed regulation motor to rotate through the compensation transmission mechanism 24.

The assist unit 100 of embodiments of the present disclosure is integrated with a speed change function to form an ECVT (Electronically Controlled Continuously Variable Transmission), eliminating the jerking sensation caused by stepped gear shifting. At the same time, a rear derailleur and a multi-stage flywheel may be omitted, thereby reducing weight and cost and increasing compactness. Moreover, the assist power device 18 can transmit torque to the speed regulation power device 16 through the compensation transmission mechanism 24, so that the size of the speed regulation power device 16 can be further reduced, and the assist unit 100 becomes more compact and lighter in weight.

In some embodiments, in response to the assist unit 100 satisfying the preset condition, the assist unit 100 switches from the fixed gear mode to the shifting mode.

Thus, the assist unit 100 can be switched from the fixed gear mode to the shifting mode.

Specifically, in the illustrated embodiments, when the assist power device 18 drives the speed regulation power device 16 to rotate through the compensation transmission mechanism 24, the assist unit 100 is in the fixed gear mode. In the fixed gear mode, the assist power device 18 can drive the speed regulation power device 16 to rotate through the compensation transmission mechanism 24 so as to compensate for insufficient output of the speed regulation power device 16.

In response to the assist unit 100 satisfying the preset condition, the transmission connection through which the assist power device 18 drives the speed regulation power device 16 to rotate through the compensation transmission mechanism 24 is disconnected, so that the assist unit 100 switches from the fixed gear mode to the shifting mode. Thus, in the shifting mode, torque of the speed regulation power device 16 can change continuously to adapt to torque needs of the assist unit 100.

In some embodiments, in response to the assist unit 100 satisfying the preset condition includes: in response to an operating state of the speed regulation power device 16 satisfying a preset condition.

Thus, when the operating state of the speed regulation power device 16 satisfies the preset condition, the assist unit 100 can switch from the fixed gear mode to the shifting mode.

Specifically, in some embodiments, when related information of power to be output of the speed regulation power device 16 exceeds the preset threshold, for example when output of the speed regulation power device 16 is insufficient, the operating mode of the assist unit 100 is the fixed gear mode, and the assist power device 18 is capable of driving the speed regulation power device 16 to rotate through the compensation transmission mechanism 24.

When the related information of power to be output of the speed regulation power device 16 does not exceed the preset threshold, it can be determined that the operating state of the speed regulation power device 16 satisfies the preset condition. In response to the operating state of the speed regulation power device 16 satisfying the preset condition, the assist unit 100 switches from the fixed gear mode to the shifting mode.

In some embodiments, in response to the operating state of the speed regulation power device 16 satisfying the preset condition includes at least one of the following: in response to output torque of the speed regulation power device 16 being less than or equal to a preset torque value, in response to the rotation speed of the speed regulation power device 16 being greater than or equal to a preset speed value.

Thus, the operating state of the speed regulation power device 16 can be determined according to the output torque and the rotation speed of the speed regulation power device 16, thereby enabling switching between the fixed gear mode and the shifting mode of the assist unit 100.

Specifically, in some embodiments, the speed regulation power device 16 includes a speed regulation motor, the output torque of the speed regulation power device 16 may be output torque of the speed regulation motor, and the rotation speed of the speed regulation power device 16 may be the rotation speed of the speed regulation motor.

In some embodiments, in response to the operating state of the speed regulation power device 16 satisfying the preset condition includes: in response to output torque of the speed regulation power device 16 being less than or equal to a preset torque value, in response to the rotation speed of the speed regulation power device 16 being greater than or equal to a preset speed value. When the operating state of the speed regulation power device 16 satisfies either of the above two conditions, it can be determined that the operating state of the speed regulation power device 16 satisfies the preset condition. In response to the operating state of the speed regulation power device 16 satisfying the preset condition, the assist unit 100 switches from the fixed gear mode to the shifting mode.

In some embodiments, in response to the operating state of the speed regulation power device 16 satisfying the preset condition includes: in response to output torque of the speed regulation power device 16 being less than or equal to a preset torque value, or in response to the rotation speed of the speed regulation power device 16 being greater than or equal to a preset speed value.

The preset torque value and the preset speed value may be specifically set according to needs, and the present disclosure does not limit this.

In some embodiments, the assist unit 100 further includes a switch device 28. The switch device 28 is configured to conduct or disconnect the transmission connection through which the assist power device 18 drives the speed regulation power device 16 to rotate through the compensation transmission mechanism 24.

Thus, through the switch device 28, the transmission between the assist power device 18 and the speed regulation power device 16 can be disconnected and conducted.

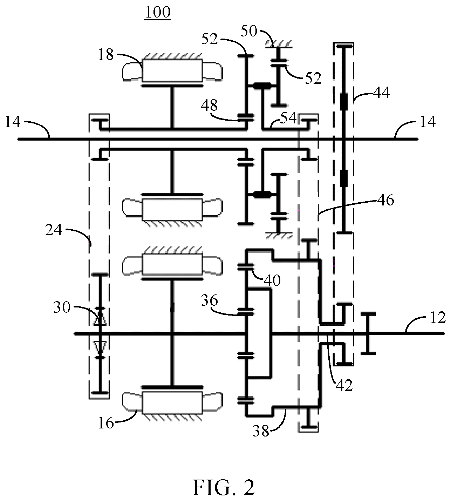

Specifically, in the embodiments shown in FIGs. 2 to 6, the speed regulation power device 16 may be connected to the compensation transmission mechanism 24 through the switch device 28. In some embodiments, the assist power device 18 may be connected to the compensation transmission mechanism 24 through the switch device 28.

When the related information of power to be output of the speed regulation power device 16 exceeds the preset threshold, the switch device 28 can conduct the transmission connection through which the assist power device 18 drives the speed regulation power device 16 to rotate through the compensation transmission mechanism 24, and the assist unit 100 may be in the fixed gear mode. The assist power device 18 may drive the speed regulation power device 16 to rotate through the compensation transmission mechanism 24, thereby eliminating the soft pedal feel to a certain extent.

When the related information of power to be output of the speed regulation power device 16 does not exceed the preset threshold, the switch device 28 can disconnect the transmission connection through which the assist power device 18 drives the speed regulation power device 16 to rotate through the compensation transmission mechanism 24, and the assist unit 100 may be in the shifting mode. The assist power device 18 cannot drive the speed regulation power device 16 to rotate through the compensation transmission mechanism 24.

In some embodiments, the switch device 28 includes a clutch. In response to the assist unit 100 satisfying the preset condition, the clutch automatically disconnects the transmission connection through which the assist power device 18 drives the speed regulation power device 16 to rotate through the compensation transmission mechanism 24.

Thus, the structure of the switch device 28 is simple and the cost is low.

Specifically, in some embodiments, the clutch may include a first part and a second part. In the embodiments shown in FIGs. 2 to 6, the compensation transmission mechanism 24 is connected to the speed regulation power device 16 through the switch device 28, the first part may be connected to the speed regulation power device 16, and the second part may be connected to the compensation transmission mechanism 24. In some embodiments, the compensation transmission mechanism 24 is connected to the assist power device 18 through the switch device 28, the first part may be connected to the assist power device 18, and the second part may be connected to the compensation transmission mechanism 24.

The first part can engage with and separate from the second part. When the first part engages with the second part, the switch device 28 can conduct the transmission connection through which the assist power device 18 drives the speed regulation power device 16 to rotate through the compensation transmission mechanism 24. When the first part separates from the second part, the switch device 28 can disconnect the transmission connection through which the assist power device 18 drives the speed regulation power device 16 to rotate through the compensation transmission mechanism 24.

The clutch technology is mature and the structure is simple, which can effectively reduce the cost of the switch device 28.

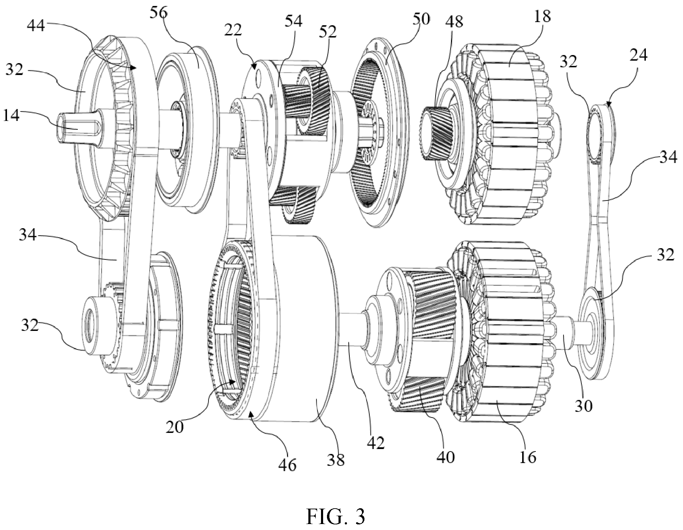

In some embodiments, referring to FIGs. 3, 5, and 6, the clutch includes a one-way bearing 30.

Thus, the transmission connection can be disconnected and conducted through the one-way bearing 30. When the assist power device 18 transmits torque to the speed regulation power device 16 through the compensation transmission mechanism 24, the transmission ratio of the assist unit 100 is fixed, and the system operates in the fixed gear mode. When vehicle speed needs to increase, the speed regulation power device 16 accelerates, the one-way bearing 30 disengages, and the system enters the ECVT mode and begins speed variation. During switching between the two modes, torque of the speed regulation power device 16 changes continuously and gears change continuously, thereby eliminating soft pedal feel and jerking sensation.

Specifically, the one-way bearing 30 allows a shaft to rotate freely in one direction while locking or generating large resistance in the other direction.

In the embodiments shown in FIGs. 2 to 6, the compensation transmission mechanism 24 is connected to the speed regulation power device 16 through the switch device 28. The speed regulation power device 16 includes a speed regulation motor, and the compensation transmission mechanism 24 may be connected to an output shaft of the speed regulation motor through the one-way bearing 30.

When the speed regulation power device 16 operates at a low rotation speed, the assist power device 18 is capable of driving the speed regulation power device 16 to rotate. When the rotation speed of the speed regulation motor increases, the one-way bearing 30 disconnects the transmission connection through which the assist power device 18 drives the speed regulation power device 16 to rotate through the compensation transmission mechanism 24, so that the rotation speed of the speed regulation power device 16 exceeds the rotation speed of the assist power device 18.

Under operating conditions requiring large pedaling torque and large output torque, which usually occurs when the speed regulation power device 16 operates at a low rotation speed, such as during a starting stage, the assist power device 18 can output torque to the speed regulation power device 16 in one direction through the one-way bearing 30, but not in the reverse direction. In some embodiments, the assist power device 18 itself does not need to be compensated with reverse torque by the speed regulation power device 16, because the size and parameters of the assist power device 18 itself are sufficient to satisfy assist needs.

In some embodiments, the one-way bearing 30 is connected to the output shaft of the speed regulation power device 16, and the compensation transmission mechanism 24 is connected to the speed regulation power device 16 through the one-way bearing 30. Specifically, the one-way bearing 30 includes an inner ring structure and an outer ring structure cooperating with the inner ring structure. The compensation transmission mechanism 24 is fixedly connected to one of the inner ring structure or the outer ring structure, and the output shaft of the speed regulation power device 16 is fixedly connected to the other of the inner ring structure or the outer ring structure. When the output shaft of the speed regulation power device 16 is connected to the inner ring structure of the one-way bearing 30, the output shaft of the speed regulation power device 16 may pass through the inner ring structure of the one-way bearing 30.

Thus, installation of the one-way bearing 30 is simple and efficiency is high.

Specifically, in some embodiments, the speed regulation power device 16 may include a speed regulation motor. The speed regulation motor includes a shaft output shaft, which may be a rotating shaft for power output of the speed regulation motor. A rotor of the speed regulation motor is connected to the shaft output shaft. The one-way bearing 30 is connected to the output shaft of the speed regulation motor, and the compensation transmission mechanism 24 is connected to the speed regulation motor through the one-way bearing 30. The one-way bearing 30 is capable of disconnecting and conducting the transmission connection through which the assist power device 18 drives the speed regulation motor to rotate through the compensation transmission mechanism 24.

In some embodiments, when the assist unit 100 is in the fixed gear mode, a transmission ratio between power input and power output of the assist unit 100 is a constant value.

Thus, in the fixed gear mode, the assist unit 100 can ensure that power is transmitted from input to output at a constant value.

Specifically, the magnitude of the transmission ratio in the fixed gear mode may be determined according to application scenarios, performance needs, and other factors of the assist unit 100. After the magnitude of the transmission ratio is determined, parameters and structures of transmission components of the assist unit 100 in the power transmission process may be designed so that, in the fixed gear mode, the transmission ratio between power input and power output of the assist unit 100 is the designed constant value.

In some embodiments, when the assist unit 100 is in the shifting mode, the transmission ratio between power input and power output of the assist unit 100 changes as the rotation speed of the speed regulation power device 16 changes.

Thus, in the shifting mode, the transmission ratio of the assist unit 100 can be changed through changes in the rotation speed of the speed regulation power device 16, thereby implementing a gear shifting operation of the assist unit 100.

Specifically, in the shifting mode, mapping relationships between different rotation speeds of the speed regulation power device 16 and transmission ratios of the assist unit 100 may be calibrated and stored in advance through simulation, testing, or other methods. Each mapping relationship may correspond to one gear of the assist unit 100 in the shifting mode. The assist unit 100 can regulate the rotation speed of the speed regulation power device 16 according to a gear needed by the vehicle so as to obtain a corresponding transmission ratio and transmit power at the corresponding gear, thereby effectively eliminating jerking sensations during gear switching.

In some embodiments, when the assist unit 100 is in the shifting mode, a gear of the assist unit 100 increases as the rotation speed of the speed regulation power device 16 increases.

Thus, user experience can be improved.

Specifically, in the shifting mode, the gear of the assist unit 100 increases as the rotation speed of the speed regulation power device 16 increases, that is, the gear of the assist unit 100 is positively correlated with the rotation speed of the speed regulation power device 16. When a user expects a high gear, the assist unit 100 increases the rotation speed of the speed regulation power device 16 according to the above relationship so as to obtain the desired high gear. When the user expects a low gear, the assist unit 100 decreases the rotation speed of the speed regulation power device 16 according to the above relationship so as to obtain the desired low gear. Thus, the assist unit 100 can implement corresponding control according to user expectations, thereby improving user experience.

Mapping relationships between different rotation speeds of the speed regulation power device 16 and transmission ratios of the assist unit 100 may be calibrated and stored through simulation, testing, and other methods. Each mapping relationship may correspond to one gear of the assist unit 100 in the shifting mode. Thus, the assist unit 100 can obtain a target rotation speed of the speed regulation power device 16 according to a needed gear and the mapping relationship and control the speed regulation power device 16 to operate at the target rotation speed.

In some embodiments, the compensation transmission mechanism 24 includes at least one of the following: a mechanical transmission mechanism, a hydraulic transmission mechanism, a magnetic transmission mechanism, a hydrodynamic transmission mechanism, and an electromagnetic transmission mechanism.

Thus, the structure of the compensation transmission mechanism 24 can be flexibly configured.

Specifically, in some embodiments, the compensation transmission mechanism 24 includes a mechanical transmission mechanism, a hydraulic transmission mechanism, a magnetic transmission mechanism, a hydrodynamic transmission mechanism, or an electromagnetic transmission mechanism. In some embodiments, the compensation transmission mechanism 24 includes any one, any two, any three, or any four of the following: a mechanical transmission mechanism, a hydraulic transmission mechanism, a magnetic transmission mechanism, a hydrodynamic transmission mechanism, and an electromagnetic transmission mechanism.

The mechanical transmission mechanism can transmit power through methods including but not limited to friction, meshing, linkages, ratchets, crank-slider mechanisms, eccentric wheels, or the like. The mechanical transmission mechanism generally consists of relatively few components and has a simple structure, making manufacturing and maintenance relatively easy. Under good lubrication and sealing conditions, the transmission efficiency of the mechanical transmission mechanism is relatively high. The mechanical transmission mechanism is suitable for transmission needs of various speeds and torques and satisfies application scenario needs of the assist unit 100.

The hydraulic transmission mechanism may use liquid as a working medium to transmit power. Specifically, the hydraulic transmission mechanism uses liquid as the working medium. A hydraulic pump converts power of the assist power device 18 into pressure energy of the liquid, and then through pipelines, hydraulic control and regulation devices, and actuating devices such as hydraulic cylinders or hydraulic motors, the pressure energy of the liquid is converted into mechanical energy and output to the speed regulation power device 16, thereby driving the speed regulation power device 16 to rotate.

The magnetic transmission mechanism can realize contactless power transmission using the principle of magnetic field interaction. Specifically, the magnetic transmission mechanism can use the principle of magnetic field interaction between magnets and transmit torque through a coupling field formed by magnetic field lines. When a driving magnet (also referred to as a driving magnet) rotates, a magnetic field generated by the driving magnet acts on a driven magnet (also referred to as a driven member), causing the driven magnet to rotate correspondingly, thereby realizing power transmission. Since magnetic transmission is contactless, friction and wear problems in traditional mechanical transmission are avoided.

The hydrodynamic transmission mechanism may be a transmission method based on fluid mechanics principles, transmitting power and torque by using a liquid medium. Specifically, the hydrodynamic transmission mechanism uses liquid as a working medium and is a device that realizes energy transmission through kinetic energy of the liquid. When the assist power device 18 drives an input shaft of a hydrodynamic transmission device to rotate, liquid in a working chamber interacts with impellers mounted on the input shaft, an output shaft, and a housing to transform a rotation speed and a torque input by the assist power device 18, and then output through the output shaft, thereby driving the speed regulation power device 16 to rotate.

The electromagnetic transmission mechanism is a mechanism driven by converting electromagnetic energy into mechanical energy through electromagnetic force. Specifically, the electromagnetic transmission mechanism usually includes an electromagnet portion, and its working principle is based on electromagnetic induction and magnetic field interaction. When an energized coil generates a magnetic field, the magnetic field attracts or repels ferromagnetic substances (such as an iron core or an armature), thereby realizing mechanical motion. A current of the energized coil can be determined according to power output by the assist power device 18, so that the power of the assist power device 18 is converted into a magnitude of current. The energized coil can convert the magnitude of current into a magnitude of magnetic field, so that the ferromagnetic substances generate corresponding motion and drive the speed regulation power device 16 to rotate.

In some embodiments, the mechanical transmission mechanism includes at least one of the following: a gear transmission mechanism, a wheel transmission mechanism, and a worm-gear transmission mechanism.

Thus, the mechanical transmission mechanism has a simple structure and a relatively low cost.

Specifically, in some embodiments, the mechanical transmission mechanism includes a gear transmission mechanism, a wheel transmission mechanism, or a worm-gear transmission mechanism. In some embodiments, the mechanical transmission mechanism includes any one or any two of the following: a gear transmission mechanism, a wheel transmission mechanism, and a worm-gear transmission mechanism.

The gear transmission mechanism transmits power through meshing of two or more gears. Specifically, the working principle of the gear transmission mechanism is based on the gear tooth number ratio and module. In some embodiments, the gear transmission mechanism includes a driving gear and a driven gear, where the driving gear may be connected to the assist power device 18 and the driven gear may be connected to the speed regulation power device 16. When the driving gear (also referred to as a primary gear) rotates, its teeth mesh with teeth of the driven gear (also referred to as a secondary gear), thereby driving the driven gear to rotate. By adjusting the tooth number ratio of the gears, different transmission ratios can be achieved, such as speed-increasing transmission, speed-reducing transmission, or constant-speed transmission. In addition, the module of the gear determines the size and load-carrying capacity of the gear, thereby affecting transmission efficiency and stability.

The gear transmission mechanism includes but is not limited to spur gear transmission, helical gear transmission, herringbone gear transmission, bevel gear transmission, or the like.

The wheel transmission mechanism is a mechanism that transmits power through flexible or resilient elements such as belts or chains. Specifically, the wheel transmission mechanism may include a belt pulley transmission mechanism. The belt pulley transmission mechanism transmits power through one or more flexible belts (such as rubber belts, belts, chains, or the like) wound around pulleys. The belt pulley transmission mechanism may include a driving pulley and a driven pulley. The driving pulley may be connected to the assist power device 18, and the driven pulley may be connected to the speed regulation power device 16. When the driving pulley rotates, it drives the flexible belt to move along a surface of the pulley, thereby driving the driven pulley and the speed regulation power device 16 to rotate.

The working principle of the worm-gear transmission mechanism is based on meshing between a helical shape of a worm and tooth surfaces of a worm gear. The worm gear may be connected to the assist power device 18, and the worm may be connected to the speed regulation power device. When the worm rotates, its helical shape meshes with the tooth surface of the worm gear, thereby producing a transmission effect. Due to the helical shape of the worm gear tooth surface, the worm gear can only drive the worm to rotate and thereby drive the speed regulation power device 16 to rotate, and reverse transmission cannot be achieved. Therefore, the worm-gear transmission mechanism has a characteristic of one-way transmission.

In some embodiments, the wheel transmission mechanism includes two transmission wheels 32 and a transmission member 34, where one transmission wheel 32 is connected to an output shaft of the speed regulation power device 16, another transmission wheel 32 is connected to an output shaft of the assist power device 18, and the transmission member 34 is connected to the two transmission wheels 32 to drive the two transmission wheels 32 to rotate together.

Thus, the assist power device 18 can drive the speed regulation power device 16 to rotate through the compensation transmission mechanism 24.

Specifically, of the two transmission wheels 32, one may be a driving transmission wheel 32 and the other may be a driven transmission wheel 32. The driving transmission wheel 32 may be connected to the output shaft of the assist power device 18, and the driven transmission wheel 32 may be connected to the output shaft of the speed regulation power device 16. The transmission member 34 is connected to the driving transmission wheel 32 and the driven transmission wheel 32. When the related information of power to be output of the speed regulation power device 16 exceeds the preset threshold, the output shaft of the assist power device 18 rotates, driving the driving transmission wheel 32 to rotate. When the driving transmission wheel 32 rotates, it drives the transmission member 34 to drive the driven transmission wheel 32 to rotate. When the driven transmission wheel 32 rotates, it drives the shaft output shaft of the speed regulation power device 16 to rotate, thereby enabling the assist power device 18 to drive the speed regulation power device 16 to rotate through the compensation transmission mechanism 24.

In some embodiments, the transmission wheel 32 includes at least one of the following: a pulley and a sprocket.

The transmission member 34 includes at least one of the following: a belt and a chain.

Thus, the wheel transmission mechanism has a simple structure and is easy to assemble.

Specifically, in some embodiments, the transmission wheel 32 includes a pulley and the transmission member 34 includes a belt, and the belt is connected to the two pulleys to drive the two pulleys to rotate together. In some embodiments, the transmission wheel 32 includes a sprocket and the transmission member 34 includes a chain, and the chain is connected to the two sprockets to drive the two sprockets to rotate together. In some embodiments, the transmission wheel 32 includes both a pulley and a sprocket, and the transmission member 34 includes both a belt and a chain. The belt is connected to the two pulleys to drive the two pulleys to rotate together, and the chain is connected to the two sprockets to drive the two sprockets to rotate together.

During assembly, the belt is wound around an outer circumferential surface of the pulley along the outer circumferential surface of the pulley and tensioned, thereby preventing belt slippage. Alternatively, the chain is wound around an outer circumferential surface of the sprocket along the outer circumferential surface of the sprocket and tensioned, thereby preventing chain slippage and improving assembly efficiency.

In some embodiments, the first transmission mechanism 20 includes a gear transmission mechanism. The gear transmission mechanism includes multiple gear members, where the output shaft of the speed regulation power device 16 is connected to one gear member and the power output shaft 12 is connected to another gear member.

Thus, the assist unit 100 can connect the speed regulation power device 16 and the power output shaft 12 through the gear transmission mechanism, thereby achieving high transmission efficiency and the ability to carry relatively large rotational torque.

Specifically, the gear member may include but is not limited to gears, ring gears, and other components having teeth. Teeth of the two gear members mesh with each other, so that when one gear member rotates, the other gear member can be driven to rotate, thereby realizing power transmission.

Of the two gear members, one may be a driving gear member and the other may be a driven gear member. The driving gear member may be connected to the output shaft of the speed regulation power device 16, and the driven gear member may be connected to the power output shaft 12. When the speed regulation power device 16 drives the driving gear member to rotate, the driving gear member drives the driven gear member to rotate, thereby driving the power output shaft 12 to rotate and realizing power transmission.

In some embodiments, the gear transmission mechanism includes a planetary gear transmission mechanism. The planetary gear transmission mechanism includes a sun gear, a ring gear, a planetary gear set, and a planet carrier. The sun gear is disposed within the ring gear. The planetary gear set is disposed between an inner ring of the ring gear and an outer ring of the sun gear, and the planetary gear set meshes simultaneously with the ring gear and the sun gear. The planet carrier is connected to a middle portion of the planetary gears of the planetary gear set. When the planetary gears rotate, the planet carrier is driven to rotate.

Thus, power of the speed regulation power device 16 can be transmitted to the power output shaft 12 through the planetary gear transmission mechanism, providing high transmission efficiency and the ability to carry large torque.

Specifically, for convenience of description, referring to FIGs. 2 to 6, the sun gear, ring gear, planetary gear set, and planet carrier of the first transmission mechanism 20 are respectively a first sun gear 36, a first ring gear 38, a first planetary gear set 40, and a first planet carrier 42. In some embodiments, the speed regulation power device 16 includes a speed regulation motor. In the embodiments shown in FIGs. 2 to 6, the first sun gear 36 is connected to the output shaft of the speed regulation motor, and the first planet carrier 42 is connected to the power output shaft 12.

When the speed regulation motor operates, the speed regulation motor can drive the first sun gear 36 to rotate. The first sun gear 36 can drive the first planetary gear set 40 and the first planet carrier 42 to rotate, thereby driving the power output shaft 12 to rotate, realizing transmission of power of the speed regulation motor to the power output shaft 12, and performing continuously variable transmission on the power output shaft 12.

Since the first sun gear 36 and the first planetary gear set 40 are connected through meshing teeth, efficient power transmission and large-torque transmission can be realized.

The planetary gears included in the first planetary gear set 40 may be at least one. In the embodiments shown in FIGs. 2 to 6, the planetary gears included in the first planetary gear set 40 are multiple, for example, two, three, three or more, or the like.

In some embodiments, the planetary gear set includes multiple groups of planetary gears, where one group of planetary gears meshes with the sun gear and another group of planetary gears meshes with the ring gear.

Thus, power transmission can be performed through multiple groups of planetary gears.

Specifically, in some embodiments, the planetary gear set includes two groups of planetary gears. The two groups of planetary gears mesh with each other, where one planetary gear group meshes with the first sun gear 36 and another planetary gear group meshes with the first ring gear 38. The two groups of planetary gears can be connected to the first planet carrier 42. When the speed regulation motor operates, the speed regulation motor can drive the first sun gear 36 to rotate. The first sun gear 36 drives the planetary gear group meshing with it to rotate. The planetary gear group drives the other planetary gear group and the first planet carrier 42 to rotate, thereby driving the power output shaft 12 to rotate and realizing transmission of power of the speed regulation motor to the power output shaft 12.

In some embodiments, the planetary gear set includes more than two groups of planetary gears, and the more than two groups of planetary gears mesh with each other in pairs. One planetary gear group meshes with the first sun gear 36, another planetary gear group meshes with the first ring gear 38, and other planetary gear groups mesh with the planetary gear group that meshes with the first sun gear 36 or mesh with the planetary gear group that meshes with the first ring gear 38, playing an intermediate transmission role. The planetary gear group that meshes with the first ring gear 38 can be connected to the first planet carrier 42. When the speed regulation motor operates, the speed regulation motor can drive the first sun gear 36 to rotate. The first sun gear 36 drives one planetary gear group meshing with it to rotate, and the planetary gear group drives the remaining planetary gear groups and the first planet carrier 42 to rotate, thereby driving the power output shaft 12 to rotate and realizing transmission of power of the speed regulation motor to the power output shaft 12.

In some embodiments, a number of teeth of one group of planetary gears is the same as or different from a number of teeth of another group of planetary gears.

Thus, the number of teeth of the planetary gear set can be configured according to different application scenarios.

Specifically, in some embodiments, when the number of teeth of one group of planetary gears is the same as the number of teeth of another group of planetary gears, a 1:1 transmission ratio can be achieved. This can enable the two groups of planetary gears to change only a rotation direction without changing rotation speed and torque.

In some embodiments, when the number of teeth of one group of planetary gears is different from the number of teeth of another group of planetary gears, a transmission ratio different from 1:1 can be achieved. Specifically, the transmission ratio is equal to an inverse ratio of the numbers of teeth of the two groups of planetary gears. For example, if the number of teeth of planetary gears on a power input side is 8 and the number of teeth of planetary gears on a power output side is 24, then their transmission ratio is 3:1. That is, the rotation speed on the power output side is 1/3 of the rotation speed on the power input side, and the torque on the power output side is 3 times the torque on the power input side. Conversely, if the number of teeth of planetary gears on the power input side is 24 and the number of teeth of planetary gears on the power output side is 8, then their transmission ratio is 1:3. The rotation speed on the power output side is 3 times the rotation speed on the power input side, and the torque on the power output side is 1/3 of the torque on the power input side.

When it is needed to reduce a rotation speed, planetary gears with more teeth can be selected as gears on the output side, and planetary gears with fewer teeth can be selected as gears on the input side. When it is needed to increase a rotation speed, planetary gears with fewer teeth can be selected as gears on the output side, and planetary gears with more teeth can be selected as gears on the input side. In addition to changes in rotation speed, torque also changes correspondingly. During a speed reduction process, torque increases. During a speed increase process, torque decreases.

In some embodiments, the output shaft of the speed regulation power device 16 is connected to the sun gear or the planet carrier.

Thus, power output by the speed regulation power device 16 can be input to the planetary gear transmission mechanism through the sun gear or the planet carrier.

Specifically, in some embodiments, the speed regulation power device 16 includes a speed regulation motor. In the embodiments shown in FIGs. 2 to 6, the output shaft of the speed regulation motor is connected to the first sun gear 36, so that power output by the speed regulation motor can be input to the planetary gear transmission mechanism through the first sun gear 36. The first planet carrier 42 can be connected to the power output shaft 12.

When the speed regulation motor operates, the speed regulation motor can drive the first sun gear 36 to rotate, and the first sun gear 36 can drive the first planetary gear set 40 and the first planet carrier 42 to rotate, thereby driving the power output shaft 12 to rotate and realizing transmission of power of the speed regulation motor to the power output shaft 12.

In some embodiments, the output shaft of the speed regulation motor is connected to the first planet carrier 42, so that power output by the speed regulation motor can be input to the planetary gear transmission mechanism through the first planet carrier 42. The first sun gear 36 can be connected to the power output shaft 12.

When the speed regulation motor operates, the speed regulation motor can drive the first planet carrier 42 to rotate, and the first planet carrier 42 can drive the first planetary gear set 40 and the first sun gear 36 to rotate, thereby driving the power output shaft 12 to rotate and realizing transmission of power of the speed regulation motor to the power output shaft 12.

In some embodiments, the power output shaft 12 is connected to the planet carrier or the sun gear.

Thus, power transmitted by the planetary gear transmission mechanism can be transmitted to the power output shaft 12 through the planet carrier or the sun gear.

Specifically, the speed regulation power device 16 includes a speed regulation motor. In the embodiments shown in FIGs. 2 to 6, the power output shaft 12 is connected to the first planet carrier 42, so that power transmitted by the planetary gear transmission mechanism can be output to the power output shaft 12 through the first planet carrier 42. The output shaft of the speed regulation motor can be connected to the first sun gear 36.

When the speed regulation motor operates, the speed regulation motor can drive the first sun gear 36 to rotate, and the first sun gear 36 can drive the first planetary gear set 40 and the first planet carrier 42 to rotate, thereby driving the power output shaft 12 to rotate and realizing transmission of power of the speed regulation motor to the power output shaft 12.

In some embodiments, the power output shaft 12 is connected to the first sun gear 36, so that power transmitted by the planetary gear transmission mechanism can be output to the power output shaft 12 through the first sun gear 36. The output shaft of the speed regulation motor can be connected to the first planet carrier 42.

When the speed regulation motor operates, the speed regulation motor can drive the first planet carrier 42 to rotate, and the first planet carrier 42 can drive the first planetary gear set 40 and the first sun gear 36 to rotate, thereby driving the power output shaft 12 to rotate and realizing transmission of power of the speed regulation motor to the power output shaft 12.

In some embodiments, the ring gear is connected to the power input shaft 14 through the third transmission mechanism 44.

Thus, when the assist power device 18 operates, the power input shaft 14 and the assist power device 18 can jointly drive the power output shaft 12 to rotate. When the assist power device 18 does not operate, the power input shaft 14 can drive the power output shaft 12 to rotate alone.

Specifically, the assist power device 18 can be connected to the power output shaft 12 through the second transmission mechanism 22 and the first transmission mechanism 20, and can be connected to the power input shaft 14 through the second transmission mechanism 22, the first transmission mechanism 20, and the third transmission mechanism 44. The first ring gear 38 is connected to the power input shaft 14 through the third transmission mechanism 44. When the power input shaft 14 receives power input from the power input device 200, the power input shaft 14 can transmit power to the first ring gear 38 through the third transmission mechanism 44, thereby driving the first ring gear 38 to rotate.

The first ring gear 38 can be connected to the first planet carrier 42 through the first planetary gear set 40, and the first planet carrier 42 is connected to the power output shaft 12. Thus, the first ring gear 38 can drive the power output shaft 12 to rotate, so that power input by the power input shaft 14 is transmitted to the power output shaft 12 through the third transmission mechanism 44 and the first transmission mechanism 20.

In the embodiments shown in FIGs. 2 to 6, the assist power device 18 is connected to the first ring gear 38 through the second transmission mechanism 22. When the assist power device 18 operates, it can drive the first ring gear 38 to rotate through the second transmission mechanism 22. Thus, at the first ring gear 38, power input by the power input device 200 and assist power provided by the assist power device 18 can jointly drive the first ring gear 38 to rotate, thereby jointly driving the power output shaft 12 to rotate.

In some embodiments, one of the first sun gear 36 or the first planet carrier 42 is connected to the output shaft of the speed regulation power device 16, and the other is connected to the power output shaft 12.

Thus, the speed regulation power device 16 can input speed regulation power into the first transmission mechanism 20 through the first sun gear 36 or the first planet carrier 42, and the first transmission mechanism 20 can output power of the speed regulation power device 16 to the power output shaft 12 through the planet carrier or the sun gear.

Specifically, in the embodiments shown in FIGs. 2 to 6, the speed regulation power device 16 includes a speed regulation motor. The output shaft of the speed regulation power device 16 may be connected to a rotor of the speed regulation motor. The output shaft of the speed regulation power device 16 is connected to the first sun gear 36, and the first planet carrier 42 is connected to the power output shaft 12. When the speed regulation motor operates, it can drive the first sun gear 36 to rotate. The first sun gear 36 drives the first planetary gear set 40 to rotate, thereby driving the first planet carrier 42 and the power output shaft 12 to rotate, realizing that the speed regulation power device 16 regulates the rotation speed of the power output shaft 12.

In some embodiments, the output shaft of the speed regulation power device 16 is connected to the first planet carrier 42, and the first sun gear 36 is connected to the power output shaft 12. When the speed regulation motor operates, it can drive the first planet carrier 42 to rotate. The first planet carrier 42 drives the first planetary gear set 40 to rotate, thereby driving the first sun gear 36 and the power output shaft 12 to rotate, realizing that the speed regulation power device 16 regulates the rotation speed of the power output shaft 12.

In some embodiments, the first ring gear 38 is connected to the second transmission mechanism 22 through the fourth transmission mechanism 46.

Thus, the assist power device 18 can provide power to the first ring gear 38 of the first transmission mechanism 20 sequentially through the second transmission mechanism 22 and the fourth transmission mechanism 46, thereby providing assist power to the power output shaft 12.

Specifically, in the embodiments shown in FIGs. 2 to 6, the first planet carrier 42 is connected to the power output shaft 12. The assist power device 18 includes an assist motor. When the assist motor operates, it can drive the second transmission mechanism 22 to move, thereby driving components of the fourth transmission mechanism 46 and the first ring gear 38 to rotate. When the first ring gear 38 rotates, it can drive the first planetary gear set 40 to rotate, thereby driving the first planet carrier 42 and the power output shaft 12 to rotate, realizing that the assist power device 18 provides assist power to the power output shaft 12.

In some embodiments, the second transmission mechanism 22 includes a gear transmission mechanism. The gear transmission mechanism includes a plurality of gear members. The output shaft of the assist power device 18 is connected to one gear member, and the first transmission mechanism 20 is connected to another gear member.

Thus, the assist unit 100 can connect the assist power device 18 and the first transmission mechanism 20 through the gear transmission mechanism, providing high transmission efficiency and the ability to carry relatively large rotational torque.

Specifically, the gear member may include but is not limited to gear, ring gear, or other components having teeth. Teeth of the two gear members mesh with each other, so that when one gear member rotates, the other gear member can be driven to rotate, thereby realizing power transmission.

Of the two gear members, one may be a driving gear member and the other may be a driven gear member. The driving gear member may be connected to the output shaft of the assist power device 18, and the driven gear member may be connected to the first transmission mechanism 20. When the assist power device 18 drives the driving gear member to rotate, the driving gear member drives the driven gear member to rotate, thereby driving components of the first transmission mechanism 20 (such as the first ring gear 38 or the like) to rotate and realizing power transmission.

In some embodiments, the gear transmission mechanism includes a planetary gear transmission mechanism. The planetary gear transmission mechanism includes a sun gear, a ring gear, a planetary gear set, and a planet carrier. The sun gear is disposed within the ring gear. The planetary gear set is disposed between an inner ring of the ring gear and an outer ring of the sun gear, and the planetary gear set meshes simultaneously with the ring gear and the sun gear. The planet carrier is connected to a middle portion of the planetary gears of the planetary gear set. When the planetary gears rotate, the planet carrier is driven to rotate.

Thus, power of the assist power device 18 can be transmitted to the power output shaft 12 through the planetary gear transmission mechanism, providing high transmission efficiency and the ability to carry large torque.

Specifically, for convenience of description, referring to FIGs. 2 to 6, the sun gear, ring gear, planetary gear set, and planet carrier of the second transmission mechanism 22 are respectively a second sun gear 48, a second ring gear 50, a second planetary gear set 52, and a second planet carrier 54. In some embodiments, the assist power device 18 includes an assist motor. In the embodiments shown in FIGs. 2 to 6, the second sun gear 48 is connected to the output shaft of the assist motor, and the second planet carrier 54 is connected to a component of the first transmission mechanism 20 (such as the first ring gear 38 or the like).

When the assist motor operates, the assist motor can drive the second sun gear 48 to rotate. The second sun gear 48 can drive the second planetary gear set 52 and the second planet carrier 54 to rotate, thereby driving components of the first transmission mechanism 20 (such as the first ring gear 38 or the like) to rotate, realizing that power of the assist motor is transmitted to the power output shaft 12 through the first transmission mechanism 20 and providing assist power to the power output shaft 12.

Since the second sun gear 48 and the second planetary gear set 52 are connected through meshing teeth, efficient power transmission and large-torque transmission can be realized.

The planetary gears included in the second planetary gear set 52 may be at least one. In the embodiments shown in FIGs. 2 to 6, the planetary gears included in the second planetary gear set 52 are multiple (for example, two or more than two).

In some embodiments, the planetary gear set includes multiple groups of planetary gears, where one group of planetary gears meshes with the sun gear and another group of planetary gears meshes with the ring gear.

Thus, power transmission can be performed through multiple groups of planetary gears.

Specifically, in some embodiments, in the embodiments shown in FIGs. 2 to 6, the planetary gear set includes two groups of planetary gears, and the two groups of planetary gears mesh with each other. One planetary gear group meshes with the second sun gear 48, and another planetary gear group meshes with the second ring gear 50. The two groups of planetary gears are connected to the second planet carrier 54. When the assist motor operates, the assist motor can drive the second sun gear 48 to rotate. The second sun gear 48 drives the planetary gear group meshing with it to rotate. The planetary gear group drives the other planetary gear group and the second planet carrier 54 to rotate, thereby driving components of the first transmission mechanism 20 (such as the first ring gear 38 or the like) to rotate, realizing transmission of power of the assist motor to the power output shaft 12 and providing assist power to the power output shaft 12.

In some embodiments, the planetary gear set includes more than two groups of planetary gears, and the more than two groups of planetary gears mesh with each other in pairs. One planetary gear group meshes with the second sun gear 48, and another planetary gear group meshes with the second ring gear 50. Other planetary gear groups mesh with the planetary gear group that meshes with the second sun gear 48 or mesh with the planetary gear group that meshes with the second ring gear 50, playing an intermediate transmission role. One group of planetary gears can be connected to the second planet carrier 54. When the assist motor operates, the assist motor can drive the second sun gear 48 to rotate. The second sun gear 48 drives one planetary gear group meshing with it to rotate. The planetary gear group drives the remaining planetary gear groups and the second planet carrier 54 to rotate and transmits power to a component of the first transmission mechanism 20 (such as the first ring gear 38 or the like), realizing that the assist motor provides assist power to the power output shaft 12.

In some embodiments, a number of teeth of one group of planetary gears is the same as or different from a number of teeth of another group of planetary gears.

Thus, the number of teeth of the planetary gear set can be configured according to application scenarios.

Specifically, in some embodiments, a number of teeth of one group of planetary gears is the same as a number of teeth of another group of planetary gears, hence a 1:1 transmission ratio can be achieved. This can enable the two groups of planetary gears to change only a rotation direction without changing rotation speed and torque.

In some embodiments, when a number of teeth of one group of planetary gears is different from a number of teeth of another group of planetary gears, a transmission ratio different from 1:1 can be achieved. Specifically, the transmission ratio is equal to an inverse ratio of the numbers of teeth of the two groups of planetary gears. For example, if the number of teeth of planetary gears on a power input side is 8 and the number of teeth of planetary gears on a power output side is 24, then their transmission ratio is 3:1. That is, the rotation speed on the power output side is 1/3 of the rotation speed on the power input side, and the torque on the power output side is 3 times the torque on the power input side. Conversely, if the number of teeth of planetary gears on the power input side is 24 and the number of teeth of planetary gears on the power output side is 8, then their transmission ratio is 1:3. The rotation speed on the power output side is 3 times the rotation speed on the power input side, and the torque on the power output side is 1/3 of the torque on the power input side.

When it is needed to reduce a rotation speed, planetary gears with more teeth can be selected as gears on an output side, and planetary gears with fewer teeth can be selected as gears on an input side. When it is needed to increase a rotation speed, planetary gears with fewer teeth can be selected as gears on the output side, and planetary gears with more teeth can be selected as gears on the input side. In addition to changes in rotation speed, torque also changes correspondingly. During a speed reduction process, torque increases. During a speed increase process, torque decreases.

In some embodiments, an output shaft of the assist power device 18 is connected to the sun gear or the planet carrier.

Thus, power output by the assist power device 18 can be input to the planetary gear transmission mechanism through the sun gear or the planet carrier.

Specifically, in some embodiments, the speed regulation power device 16 includes a speed regulation motor. In the embodiments shown in FIGs. 2 to 6, an output shaft of the speed regulation motor is connected to the second sun gear 48, so that power output by the assist motor can be input to the planetary gear transmission mechanism through the second sun gear 48. The second planet carrier 54 can be connected to a component of the first transmission mechanism 20 (such as the first ring gear 38 or the like).

When the assist motor operates, the assist motor can drive the second sun gear 48 to rotate. The second sun gear 48 can drive the second planetary gear set 52 and the second planet carrier 54 to rotate, thereby driving a component of the first transmission mechanism 20 (such as the first ring gear 38 or the like) to rotate, realizing transmission of power of the assist motor to the power output shaft 12 and providing assist power to the power output shaft 12.

In some embodiments, an output shaft of the assist motor is connected to the second planet carrier 54, so that power output by the assist motor can be input to the planetary gear transmission mechanism through the second planet carrier 54. The second sun gear 48 can be connected to the first transmission mechanism 20 (such as the first ring gear 38 or the like).

When the assist motor operates, the assist motor can drive the second planet carrier 54 to rotate. The second planet carrier 54 can drive the second planetary gear set 52 and the second sun gear 48 to rotate, thereby driving a component of the first transmission mechanism 20 (such as the first ring gear 38 or the like) to rotate, realizing transmission of power of the assist motor to the power output shaft 12 and providing assist power to the power output shaft 12.

In some embodiments, the first transmission mechanism 20 is connected to the planet carrier or the sun gear.

Thus, power transmitted by the planetary gear transmission mechanism can be transmitted to the first transmission mechanism 20 through the planet carrier or the sun gear, thereby providing assist power to the power output shaft 12.

Specifically, the assist power device 18 includes an assist motor. In the embodiments shown in FIGs. 2 to 6, a component of the first transmission mechanism 20 (such as the first ring gear 38 or the like) is connected to the second planet carrier 54, so that power transmitted by the planetary gear transmission mechanism can be output to the component of the first transmission mechanism 20 (such as the first ring gear 38 or the like) through the second planet carrier 54. The output shaft of the assist motor can be connected to the second sun gear 48.

When the assist motor operates, the assist motor can drive the second sun gear 48 to rotate. The second sun gear 48 can drive the second planetary gear set 52 and the second planet carrier 54 to rotate, thereby driving a component of the first transmission mechanism 20 (such as the first ring gear 38 or the like) to rotate, realizing transmission of power of the assist motor to the power output shaft 12 and providing assist power to the power output shaft 12.

In some embodiments, a component of the first transmission mechanism 20 (such as the first ring gear 38 or the like) is connected to the second sun gear 48, so that power transmitted by the planetary gear transmission mechanism can be output to the component of the first transmission mechanism 20 (such as the first ring gear 38 or the like) through the second sun gear 48. The output shaft of the assist motor can be connected to the second planet carrier 54.

When the assist motor operates, the assist motor can drive the second planet carrier 54 to rotate. The second planet carrier 54 can drive the second planetary gear set 52 and the second sun gear 48 to rotate, thereby driving a component of the first transmission mechanism 20 (such as the first ring gear 38 or the like) to rotate, realizing transmission of power of the assist motor to the power output shaft 12 and providing assist power to the power output shaft 12.

In some embodiments, the ring gear is fixed and does not rotate.

Thus, stability during operation of the assist power device 18 can be improved.

Specifically, in the embodiments shown in FIGs. 2 to 6, the output shaft of the assist motor is connected to the second sun gear 48, and the second planet carrier 54 is connected to a component of the first transmission mechanism 20 (such as the first ring gear 38 or the like). When the assist motor operates, the assist motor can drive the second sun gear 48 to rotate. The second sun gear 48 drives the second planetary gear set 52 and the second planet carrier 54 to rotate, thereby driving the component of the first transmission mechanism 20 (such as the first ring gear 38 or the like) to rotate. The second ring gear 50 of the second transmission mechanism 22 is fixed and does not rotate, so that planetary gears of the second planetary gear set 52 rotating on an inner ring of the second ring gear 50 can rotate stably, and torque of the assist motor can be transmitted to the second planet carrier 54 and the component of the first transmission mechanism 20 (such as the first ring gear 38 or the like), so that the assist power device 18 provides larger and more stable torque to the power output shaft 12.

In some embodiments, the output shaft of the assist motor is connected to the second planet carrier 54, and the second sun gear 48 is connected to a component of the first transmission mechanism 20 (such as the first ring gear 38 or the like).

In some embodiments, one of the sun gear or the planet carrier is connected to the output shaft of the assist power device 18, and the other is connected to the first transmission mechanism 20.

Thus, the assist power device 18 can input assist power into the second transmission mechanism 22 through the sun gear or the planet carrier, and the second transmission mechanism 22 can output power of the assist power device 18 to a component of the first transmission mechanism 20 (such as the first ring gear 38 or the like) through the planet carrier or the sun gear.

Specifically, in the embodiments shown in FIGs. 2 to 6, the assist power device 18 includes an assist motor. The output shaft of the assist power device 18 may be connected to a rotor of the assist motor. The output shaft of the assist power device 18 is connected to the second sun gear 48, and the second planet carrier 54 is connected to a component of the first transmission mechanism 20 (such as the first ring gear 38 or the like). When the assist motor operates, it can drive the second sun gear 48 to rotate. The second sun gear 48 drives the second planetary gear set 52 to rotate, thereby driving the second planet carrier 54 and the component of the first transmission mechanism 20 (such as the first ring gear 38 or the like) to rotate, realizing that the assist power device 18 provides assist power to the power output shaft 12.

In some embodiments, the output shaft of the assist power device 18 is connected to the second planet carrier 54, and the second sun gear 48 is connected to a component of the first transmission mechanism 20 (such as the first ring gear 38 or the like). When the assist motor operates, it can drive the second planet carrier 54 to rotate. The second planet carrier 54 drives the second planetary gear set 52 to rotate, thereby driving the second sun gear 48 and the component of the first transmission mechanism 20 (such as the first ring gear 38 or the like) to rotate, realizing that the assist power device 18 provides assist power to the power output shaft 12.

In some embodiments, the assist unit 100 further includes the third transmission mechanism 44. The power input shaft 14 drives one component of the first transmission mechanism 20 to rotate through the third transmission mechanism 44.

Thus, when the assist power device 18 operates, the power input shaft 14 and the assist power device 18 can jointly drive the power output shaft 12 to rotate. When the assist power device 18 does not operate, the power input shaft 14 can drive the power output shaft 12 to rotate alone.

Specifically, the assist power device 18 can be connected to the power output shaft 12 through the second transmission mechanism 22 and the first transmission mechanism 20. The power output shaft 12 is connected to one component of the first transmission mechanism 20 (such as the first ring gear 38 or the like) through the third transmission mechanism 44. When the power input shaft 14 receives power input from the power input device 200, the power input shaft 14 can transmit power to the first ring gear 38 through the third transmission mechanism 44, thereby driving the first ring gear 38 to rotate.

The first ring gear 38 can be connected to the first planet carrier 42 through the first planetary gear set 40, and the first planet carrier 42 is connected to the power output shaft 12. Thus, the first ring gear 38 can drive the power output shaft 12 to rotate, so that power input by the power input shaft 14 is transmitted to the power output shaft 12 through the third transmission mechanism 44 and the first transmission mechanism 20.

In the embodiments shown in FIGs. 2 to 6, the assist power device 18 is connected to the first ring gear 38 through the second transmission mechanism 22. When the assist power device 18 operates, it can drive the first ring gear 38 to rotate through the second transmission mechanism 22. Thus, at the first ring gear 38, power input by the power input device 200 and assist power provided by the assist power device 18 can jointly drive the first ring gear 38 to rotate, thereby jointly driving the power output shaft 12 to rotate.

In some embodiments, the third transmission mechanism 44 includes at least one of the following: a mechanical transmission mechanism, a hydraulic transmission mechanism, a magnetic transmission mechanism, a hydrodynamic transmission mechanism, and an electromagnetic transmission mechanism.

Thus, the structure of the third transmission mechanism 44 can be flexibly configured.

Specifically, in some embodiments, the third transmission mechanism 44 includes a mechanical transmission mechanism, a hydraulic transmission mechanism, a magnetic transmission mechanism, a hydrodynamic transmission mechanism, or an electromagnetic transmission mechanism. In some embodiments, the third transmission mechanism 44 includes any two, any three, or any four of the following: a mechanical transmission mechanism, a hydraulic transmission mechanism, a magnetic transmission mechanism, a hydrodynamic transmission mechanism, and an electromagnetic transmission mechanism.

Specific descriptions of the mechanical transmission mechanism, the hydraulic transmission mechanism, the magnetic transmission mechanism, the hydrodynamic transmission mechanism, and the electromagnetic transmission mechanism may refer to the descriptions of the above embodiments, and are not described in detail here.

In some embodiments, the mechanical transmission mechanism includes at least one of the following: a gear transmission mechanism, a wheel transmission mechanism, and a worm-gear transmission mechanism.

Thus, the mechanical transmission mechanism has a simple structure and a low cost.

Specifically, in some embodiments, the mechanical transmission mechanism includes a gear transmission mechanism, a wheel transmission mechanism, or a worm-gear transmission mechanism. In some embodiments, the mechanical transmission mechanism includes any two of the following: a gear transmission mechanism, a wheel transmission mechanism, and a worm-gear transmission mechanism.

For specific descriptions of the gear transmission mechanism, the wheel transmission mechanism, and the worm-gear transmission mechanism, reference may be made to the descriptions of the above embodiments, which are not described in detail here.

In some embodiments, the wheel transmission mechanism includes two transmission wheels 32 and a transmission member 34, where one transmission wheel 32 is connected to the power input shaft 14, another transmission wheel 32 is connected to the first transmission mechanism 20, and the transmission member 34 is connected to the two transmission wheels 32 to drive the two transmission wheels 32 to rotate together.

Thus, the power input shaft 14 can drive one component of the first transmission mechanism 20 to rotate through the third transmission mechanism 44.

Specifically, of the two transmission wheels 32, one may be a driving transmission wheel 32 and the other may be a driven transmission wheel 32. The driving transmission wheel 32 may be connected to the power input shaft 14, and the driven transmission wheel 32 may be connected to one component of the first transmission mechanism 20 (such as the first ring gear 38 or the like). The transmission member 34 is connected to the driving transmission wheel 32 and the driven transmission wheel 32. When the power input shaft 14 receives power input from the power input device 200, the power input shaft 14 rotates and drives the driving transmission wheel 32 to rotate. When the driving transmission wheel 32 rotates, it drives the transmission member 34 to drive the driven transmission wheel 32 to rotate. When the driven transmission wheel 32 rotates, it drives one component of the first transmission mechanism 20 (such as the first ring gear 38 or the like) to rotate, thereby enabling the power input shaft 14 to drive one component of the first transmission mechanism 20 (such as the first ring gear 38 or the like) to rotate through the third transmission mechanism 44.

In some embodiments, the transmission wheel 32 includes at least one of the following: a pulley and a sprocket.

The transmission member 34 includes at least one of the following: a belt and a chain.

Thus, the wheel transmission mechanism has a simple structure and is easy to assemble.

Specifically, in some embodiments, the transmission wheel 32 includes a pulley, the transmission member 34 includes a belt, and the belt is connected to the two pulleys to drive the two pulleys to rotate together. In some embodiments, the transmission wheel 32 includes a sprocket, the transmission member 34 includes a chain, and the chain is connected to the two sprockets to drive the two sprockets to rotate together. In some embodiments, the transmission wheel 32 includes a pulley and a sprocket, and the transmission member 34 includes a belt and a chain. The belt is connected to the two pulleys to drive the two pulleys to rotate together, and the chain is connected to the two sprockets to drive the two sprockets to rotate together.

During assembly, the belt is wound around an outer circumferential surface of the pulley along the outer circumferential surface of the pulley and tensioned, thereby preventing belt slippage. Alternatively, the chain is wound around an outer circumferential surface of the sprocket along the outer circumferential surface of the sprocket and tensioned, thereby preventing chain slippage, and assembly efficiency is high.

In some embodiments, the assist unit 100 further includes a fourth transmission mechanism 46, and the second transmission mechanism 22 drives one component of the first transmission mechanism 20 to rotate through the fourth transmission mechanism 46.

Thus, the assist power device 18 can sequentially provide power to one component of the first transmission mechanism 20 through the second transmission mechanism 22 and the fourth transmission mechanism 46, thereby providing assist power to the power output shaft 12.

Specifically, in the embodiments shown in FIGs. 2 to 6, the first planet carrier 42 is connected to the power output shaft 12. The assist power device 18 includes an assist motor. When the assist motor operates, it can drive the second transmission mechanism 22 to move, thereby driving a component of the fourth transmission mechanism 46 and one component of the first transmission mechanism 20 (such as the first ring gear 38 or the like) to rotate. When the first ring gear 38 rotates, it can drive the first planetary gear set 40 to rotate, thereby driving the first planet carrier 42 and the power output shaft 12 to rotate, realizing that the assist power device 18 provides assist power to the power output shaft 12.

In some embodiments, the fourth transmission mechanism 46 includes at least one of the following: a mechanical transmission mechanism, a hydraulic transmission mechanism, a magnetic transmission mechanism, a hydrodynamic transmission mechanism, and an electromagnetic transmission mechanism.

Thus, the structure of the fourth transmission mechanism 46 can be flexibly configured.

Specifically, in some embodiments, the fourth transmission mechanism 46 includes a mechanical transmission mechanism, a hydraulic transmission mechanism, a magnetic transmission mechanism, a hydrodynamic transmission mechanism, or an electromagnetic transmission mechanism. In some embodiments, the fourth transmission mechanism 46 includes any two, any three, or any four of the following: a mechanical transmission mechanism, a hydraulic transmission mechanism, a magnetic transmission mechanism, a hydrodynamic transmission mechanism, and an electromagnetic transmission mechanism.

For specific descriptions of the mechanical transmission mechanism, the hydraulic transmission mechanism, the magnetic transmission mechanism, the hydrodynamic transmission mechanism, and the electromagnetic transmission mechanism, reference may be made to the descriptions of the above embodiments, which are not described in detail here.

It should be understood that structural types of the compensation transmission mechanism 24, the third transmission mechanism 44, and the fourth transmission mechanism 46 may be the same or may be different, and the present disclosure does not limit this.

In some embodiments, the mechanical transmission mechanism includes at least one of the following: a gear transmission mechanism, a wheel transmission mechanism, and a worm-gear transmission mechanism.

Thus, the mechanical transmission mechanism has a simple structure and a low cost.

Specifically, in some embodiments, the mechanical transmission mechanism includes: a gear transmission mechanism, a wheel transmission mechanism, and a worm-gear transmission mechanism. In some embodiments, the mechanical transmission mechanism includes any one or any two of the following: a gear transmission mechanism, a wheel transmission mechanism, and a worm-gear transmission mechanism.

For specific descriptions of the gear transmission mechanism, the wheel transmission mechanism, and the worm-gear transmission mechanism, reference may be made to the descriptions of the above embodiments, which are not described in detail here.

In some embodiments, the wheel transmission mechanism includes two transmission wheels 32 and a transmission member 34, where one transmission wheel 32 is connected to the second transmission mechanism 22, another transmission wheel 32 is connected to the first transmission mechanism 20, and the transmission member 34 is connected to the two transmission wheels 32 to drive the two transmission wheels 32 to rotate together.

Thus, the assist power device 18 can drive one component of the first transmission mechanism 20 to rotate through the second transmission mechanism 22 and the fourth transmission mechanism 46.

Specifically, of the two transmission wheels 32, one may be a driving transmission wheel 32 and the other may be a driven transmission wheel 32. The driving transmission wheel 32 may be connected to one component of the second transmission mechanism 22 (such as the second planet carrier 54 or the like), and the driven transmission wheel 32 may be connected to one component of the first transmission mechanism 20 (such as the first ring gear 38 or the like). The transmission member 34 is connected to the driving transmission wheel 32 and the driven transmission wheel 32. When the output shaft of the assist power device 18 drives one component of the second transmission mechanism 22 (such as the second planet carrier 54 or the like) to rotate, the second planet carrier 54 can drive the driving transmission wheel 32 to rotate. When the driving transmission wheel 32 rotates, it drives the transmission member 34 to drive the driven transmission wheel 32 to rotate. When the driven transmission wheel 32 rotates, it drives one component of the first transmission mechanism 20 (such as the first ring gear 38 or the like) to rotate, thereby enabling the assist power device 18 to drive one component of the first transmission mechanism 20 (such as the first ring gear 38 or the like) to rotate through the second transmission mechanism 22 and the fourth transmission mechanism 46 and provide assist power to the power output shaft 12.

In some embodiments, the transmission wheel 32 includes at least one of the following: a pulley and a sprocket.

The transmission member 34 includes at least one of the following: a belt and a chain.

Thus, the wheel transmission mechanism has a simple structure and is easy to assemble.

Specifically, in some embodiments, the transmission wheel 32 includes a pulley, the transmission member 34 includes a belt, and the belt is connected to the two pulleys to drive the two pulleys to rotate together. In some embodiments, the transmission wheel 32 includes a sprocket, the transmission member 34 includes a chain, and the chain is connected to the two sprockets to drive the two sprockets to rotate together. In some embodiments, the transmission wheel 32 includes a pulley and a sprocket, and the transmission member 34 includes a belt and a chain. The belt is connected to the two pulleys to drive the two pulleys to rotate together, and the chain is connected to the two sprockets to drive the two sprockets to rotate together.

During assembly, the belt is wound around an outer circumferential surface of the pulley along the outer circumferential surface of the pulley and tensioned, thereby preventing belt slippage. Alternatively, the chain is wound around an outer circumferential surface of the sprocket along the outer circumferential surface of the sprocket and tensioned, thereby preventing chain slippage, and assembly efficiency is high.

In some embodiments, referring to FIG. 1 and FIGs. 3 to 6, the assist unit 100 further includes a clutch 56. The power input shaft 14 drives one component of the first transmission mechanism 20 to rotate through the third transmission mechanism 44. The clutch 56 is configured to disconnect or conduct a transmission connection through which the power input shaft 14 drives one component of the first transmission mechanism 20 to rotate through the third transmission mechanism 44.

Thus, the clutch 56 has a simple structure and a low cost.

Optionally, the clutch 56 may include a first part and a second part. The first part may be connected to the power input shaft 14, and the second part may be connected to one component of the third transmission mechanism 44.

The first part can engage with and separate from the second part. When the first part engages with the second part, the clutch 56 can conduct the transmission connection through which the power input shaft 14 drives one component of the first transmission mechanism 20 to rotate through the third transmission mechanism 44. When the first part separates from the second part, the clutch 56 can disconnect the transmission connection through which the power input shaft 14 drives one component of the first transmission mechanism 20 to rotate through the third transmission mechanism 44.

The clutch 56 involves a mature technology and has a simple structure, which can effectively reduce the cost of the assist unit 100.

In some embodiments, the clutch 56 includes a one-way bearing 30.

Thus, the transmission connection can be disconnected and conducted through the one-way bearing 30.

Specifically, the one-way bearing 30 allows a shaft to rotate freely in one direction while locking or generating large resistance in the other direction.

When the rotation speed of the power input shaft 14 is greater than or equal to the rotation speed of the third transmission mechanism 44, the one-way bearing 30 can conduct the transmission connection through which the power input shaft 14 drives one component of the first transmission mechanism 20 to rotate through the third transmission mechanism 44. Thus, the power input shaft 14 can drive one component of the first transmission mechanism 20 (such as the first ring gear 38 in the drawings) to rotate through the third transmission mechanism 44, thereby driving the power output shaft 12 to rotate.

When the rotation speed of the power input shaft 14 is less than the rotation speed of the third transmission mechanism 44, the one-way bearing 30 can disconnect the transmission connection through which the power input shaft 14 drives one component of the first transmission mechanism 20 to rotate through the third transmission mechanism 44. At this time, the power input shaft 14 cannot drive one component of the first transmission mechanism 20 to rotate through the third transmission mechanism 44.

In some embodiments, the one-way bearing 30 is connected to the power input shaft 14, and the third transmission mechanism 44 is connected to the power input shaft 14 through the one-way bearing 30.

Thus, installation of the one-way bearing 30 is simple and efficiency is high.

Specifically, the one-way bearing 30 is capable of disconnecting or conducting the transmission connection through which the power input shaft 14 drives one component of the first transmission mechanism 20 to rotate through the third transmission mechanism 44, thereby realizing that power received by the power input shaft 14 is transmitted from the third transmission mechanism 44 to the first transmission mechanism 20, and power cannot be transmitted from the third transmission mechanism 44 to the power input shaft 14.

In some embodiments, when a speed of the third transmission mechanism 44 is greater than a speed of the power input shaft 14, the one-way bearing 30 disconnects the transmission connection through which the power input shaft 14 drives one component of the first transmission mechanism 20 to rotate through the third transmission mechanism 44.

Thus, unidirectionality of power transmission can be realized through the one-way bearing 30.

Specifically, when the speed of the third transmission mechanism 44 is greater than the speed of the power input shaft 14, the one-way bearing 30 disconnects the transmission connection through which the power input shaft 14 drives one component of the first transmission mechanism 20 to rotate through the third transmission mechanism 44, so that power of the third transmission mechanism 44 cannot be transmitted to the power input shaft 14.

When the speed of the third transmission mechanism 44 is less than or equal to the speed of the power input shaft 14, the one-way bearing 30 conducts the transmission connection through which the power input shaft 14 drives one component of the first transmission mechanism 20 to rotate through the third transmission mechanism 44, so that power of the power input shaft 14 can drive one component of the first transmission mechanism 20 (such as the first ring gear 38 or the like) to rotate through the third transmission mechanism 44, thereby realizing transmission of power of the power input shaft 14 to the power output shaft 12.

In some embodiments, the output shaft of the assist power device 18 is a hollow shaft, and the power input shaft 14 passes through the output shaft of the assist power device 18.

Thus, a compact and low-cost assist unit 100 can be realized, which is beneficial to miniaturized design of the assist unit 100.

Specifically, the power input shaft 14 passing through the output shaft of the assist power device 18 can avoid occupying a certain space by separately providing the power input shaft 14, and can also save an additional transmission mechanism provided because the power input shaft 14 is arranged outside the output shaft of the assist power device 18.

In some embodiments, the assist power device 18 includes an assist motor, and a rotor of the assist motor can be connected to the output shaft of the assist power device 18. When the assist motor operates, the assist motor can drive the output shaft to rotate. The output shaft can drive one component of the first transmission mechanism 20 to rotate through the second transmission mechanism 22, thereby providing assist power to the power output shaft 12. When the power input shaft 14 rotates, the power input shaft 14 can drive one component of the first transmission mechanism 20 to rotate through the third transmission mechanism 44, thereby transmitting power of the power input device 200 to the power output shaft 12.

In some embodiments, the output shaft of the assist power device 18 is capable of rotating relative to the power input shaft 14.

Thus, the output shaft of the assist power device 18 and the power input shaft 14 can rotate independently of each other.

Specifically, the power input shaft 14 passes through the hollow output shaft of the assist power device 18, and the output shaft of the assist power device 18 is capable of rotating relative to the power input shaft 14. Therefore, when the assist motor operates, the assist motor can drive the output shaft to rotate. The output shaft can drive one component of the first transmission mechanism 20 to rotate through the second transmission mechanism 22, thereby providing assist power to the power output shaft 12.

In some embodiments, a bearing is provided between the output shaft of the assist power device 18 and the power input shaft 14.

Thus, a rotating connection structure between the output shaft of the assist power device 18 and the power input shaft 14 is simple and low in cost.

Specifically, the bearing includes an inner ring and an outer ring. The output shaft of the assist power device 18 is a hollow shaft, and the power input shaft 14 passes through the output shaft of the assist power device 18. The bearing may be disposed inside the output shaft of the assist power device 18. The outer ring of the bearing is fixedly connected to the output shaft of the assist power device 18. The power input shaft 14 may pass through the inner ring of the bearing and be fixedly connected to the inner ring of the bearing, so that the output shaft of the assist power device 18 is capable of rotating relative to the power input shaft 14 through the bearing.

The bearing disposed inside the output shaft of the assist power device 18 may be one or multiple. Multiple bearings may be disposed inside the output shaft of the assist power device 18 at uniform intervals to provide more stable support for the power input shaft 14.

In some embodiments, the assist power device 18 and at least some components of the second transmission mechanism 22 are arranged along an extending direction of the power input shaft 14.

Thus, a structurally compact assist unit 100 can be realized, which is beneficial to miniaturized design of the assist unit 100.

Specifically, the assist power device 18 and at least some components of the second transmission mechanism 22 being arranged along the extending direction of the power input shaft 14 can reduce space occupied by components of the assist unit 100 in a direction perpendicular to the extending direction of the power input shaft 14. A structurally compact assist unit 100 can be realized, which is beneficial to miniaturized design of the assist unit 100.

In the illustrated embodiments, the second transmission mechanism 22 includes a planetary gear transmission mechanism. The planetary gear transmission mechanism includes the second sun gear 48 and the second planet carrier 54. The power input shaft 14 passes through the second sun gear 48 and the second planet carrier 54. The assist power device 18, the second sun gear 48, and the second planet carrier 54 are arranged along the extending direction of the power input shaft 14.

In some other embodiments, other components of the second transmission mechanism 22 and the assist power device 18 may be arranged along the extending direction of the power input shaft 14. Alternatively, all components of the assist power device 18 and the second transmission mechanism 22 may be arranged along the extending direction of the power input shaft 14.

In some embodiments, at least some components of the second transmission mechanism 22 are sleeved on the power input shaft 14.

Thus, assembly of at least some components of the second transmission mechanism 22 with the power input shaft 14 is simple, which is beneficial to improving assembly efficiency.

Specifically, in the illustrated embodiments, the second transmission mechanism 22 includes a planetary gear transmission mechanism. The planetary gear transmission mechanism includes the second sun gear 48 and the second planet carrier 54. The second sun gear 48 and the second planet carrier 54 are sleeved on the power input shaft 14. The second sun gear 48 and the second planet carrier 54 may reserve space for the power input shaft 14 to pass through. During assembly, the power input shaft 14 can be directly passed through the second sun gear 48 and the second planet carrier 54 so that the second sun gear 48 and the second planet carrier 54 are sleeved on the power input shaft 14, which is beneficial to improving assembly efficiency.

In some other embodiments, other components of the second transmission mechanism 22 may be sleeved on the power input shaft 14. Alternatively, all components of the second transmission mechanism 22 may be sleeved on the power input shaft 14.

In some embodiments, the assist power device 18 is sleeved on the power input shaft 14.

Thus, assembly of the assist power device 18 with the power input shaft 14 is simple, which is beneficial to improving assembly efficiency.

Specifically, in the illustrated embodiments, the assist power device 18 includes an output shaft. The output shaft of the assist power device 18 is a hollow shaft, and space for the power input shaft 14 to pass through is reserved in the output shaft of the assist power device 18. During assembly, the power input shaft 14 can be directly inserted into the output shaft of the assist power device 18 so that the assist power device 18 is sleeved on the power input shaft 14, which is beneficial to improving assembly efficiency.

In some embodiments, the output shaft of the assist power device 18 and the power input shaft 14 are coaxially arranged.

Thus, a structurally compact assist unit 100 can be realized, which is beneficial to miniaturized design of the assist unit 100.

Specifically, the output shaft of the assist power device 18 and the power input shaft 14 being coaxially arranged can reduce space occupied in a direction perpendicular to the extending direction of the power input shaft 14 caused by eccentric arrangement of the output shaft of the assist power device 18 and the power input shaft 14. A structurally compact assist unit 100 can be realized, which is beneficial to miniaturized design of the assist unit 100.

Coaxial arrangement of the output shaft of the assist power device 18 and the power input shaft 14 is also easy to implement. In some embodiments, a bearing is disposed inside the output shaft of the assist power device 18, and the power input shaft 14 passes through the bearing, so that the output shaft of the assist power device 18 and the power input shaft 14 can be coaxially arranged, and the output shaft of the assist power device 18 is capable of rotating relative to the power input shaft 14.

In some embodiments, the speed regulation power device 16 and at least some components of the first transmission mechanism 20 are arranged along an extending direction of the power output shaft 12.

Thus, a structurally compact assist unit 100 can be realized, which is beneficial to miniaturized design of the assist unit 100.

Specifically, the speed regulation power device 16 and at least some components of the first transmission mechanism 20 being arranged along the extending direction of the power output shaft 12 can reduce space occupied by components of the assist unit 100 in a direction perpendicular to the extending direction of the power output shaft 12. A structurally compact assist unit 100 can be realized, which is beneficial to miniaturized design of the assist unit 100.

In the illustrated embodiments, the first transmission mechanism 20 includes a planetary gear transmission mechanism. The planetary gear transmission mechanism includes the first sun gear 36 and the first ring gear 38. The speed regulation power device 16, the first sun gear 36, and the first ring gear 38 are arranged along the extending direction of the power output shaft 12.

In some other embodiments, other components of the first transmission mechanism 20 and the speed regulation power device 16 may be arranged along the extending direction of the power output shaft 12. Alternatively, all components of the speed regulation power device 16 and the first transmission mechanism 20 may be arranged along the extending direction of the power output shaft 12.

In some embodiments, at least some components of the first transmission mechanism 20 are sleeved on an extension line of the power output shaft 12.

Thus, assembly of at least some components of the first transmission mechanism 20 with the power input shaft 14 is simple, which is beneficial to improving assembly efficiency.

Specifically, in the illustrated embodiments, the first transmission mechanism 20 includes a planetary gear transmission mechanism. The planetary gear transmission mechanism includes the first sun gear 36 and the first ring gear 38. The first sun gear 36 and the first ring gear 38 may be sleeved on the extension line of the power output shaft 12. The first sun gear 36 and the first ring gear 38 may reserve space for assembly. During assembly, the first sun gear 36 and the first ring gear 38 can be assembled according to the position of the extension line of the power output shaft 12 so that the first sun gear 36 and the first ring gear 38 are sleeved on the extension line of the power output shaft 12, which is beneficial to improving assembly efficiency. The first planet carrier 42 can pass through the first ring gear 38 to be connected to the power output shaft 12.

In some other embodiments, other components of the first transmission mechanism 20 may be sleeved on the extension line of the power output shaft 12. Alternatively, all components of the first transmission mechanism 20 may be sleeved on the extension line of the power input shaft 14.

In some embodiments, the output shaft of the speed regulation power device 16 and the power output shaft 12 are coaxially arranged.

Thus, a structurally compact assist unit 100 can be realized, which is beneficial to miniaturized design of the assist unit 100.

Specifically, the coaxial arrangement of the output shaft of the speed regulation power device 16 and the power output shaft 12 can reduce space occupied in a direction perpendicular to the extending direction of the power output shaft 12 caused by eccentric arrangement of the output shaft of the speed regulation power device 16 and the power output shaft 12. A structurally compact assist unit 100 can be realized, which is beneficial to miniaturized design of the assist unit 100.

In some embodiments, the rotation speed of the power output shaft 12 increases as the rotation speed of the speed regulation power device 16 and/or the rotation speed of the power input shaft 14 increases.

Thus, the rotation speed of the power output shaft 12 has a positive correlation relationship with the rotation speed of the speed regulation power device 16 and/or the rotation speed of the power input shaft 14.

Specifically, in some embodiments, the rotation speed of the power output shaft 12 increases as the rotation speed of the speed regulation power device 16 increases. The speed regulation power device 16 may be connected to the power output shaft 12 through the first transmission mechanism 20. In the illustrated embodiments, the output shaft of the speed regulation power device 16 is connected to the first sun gear 36, and the first planet carrier 42 is connected to the power output shaft 12. When the speed regulation motor of the speed regulation power device 16 operates, the speed regulation motor can drive the output shaft of the speed regulation power device 16 to rotate, thereby driving the first sun gear 36 to rotate. The first sun gear 36 drives the first planetary gear set 40 to rotate, causing the first planet carrier 42 and the power output shaft 12 to rotate. The greater the rotation speed of the speed regulation motor, the more power is transmitted to the power output shaft 12 through the first transmission mechanism 20, and the greater the rotation speed of the power output shaft 12.

In some embodiments, the rotation speed of the power output shaft 12 increases as the rotation speed of the power input shaft 14 increases. In the illustrated embodiments, the power input shaft 14 may be connected to the power output shaft 12 through the third transmission mechanism 44 and the first transmission mechanism 20. Specifically, the power input shaft 14 is connected to one component of the first transmission mechanism 20 (such as the first ring gear 38 or the like) through the third transmission mechanism 44. The first ring gear 38 is connected to the first planetary gear set 40. The first planetary gear set 40 is connected to the power output shaft 12 through the first planet carrier 42. The power input shaft 14 receives power input from the power input device 200 and can drive the third transmission mechanism 44 to move, thereby driving the first ring gear 38 to rotate. The first ring gear 38 drives the first planetary gear set 40 to rotate, causing the first planet carrier 42 and the power output shaft 12 to rotate. The greater the rotation speed of the power input shaft 14, the more power is transmitted to the power output shaft 12 through the third transmission mechanism 44 and the first transmission mechanism 20, and the greater the rotation speed of the power output shaft 12.

In some embodiments, the rotation speed of the power output shaft 12 increases as the rotation speed of the speed regulation power device 16 and the rotation speed of the power input shaft 14 increase. When the speed regulation power device 16 and the power input shaft 14 both operate, if the rotation speed of the speed regulation power device 16 is greater than the rotation speed of the power input shaft 14, the speed regulation power device 16 can drive the power output shaft 12 to rotate, and the rotation speed of the power output shaft 12 increases as the rotation speed of the speed regulation power device 16 increases. If the rotation speed of the power input shaft 14 is greater than the rotation speed of the speed regulation power device 16, the power input shaft 14 can drive the power output shaft 12 to rotate, and the rotation speed of the power output shaft 12 increases as the rotation speed of the power input shaft 14 increases. When the speed regulation power device 16 does not operate and the power input shaft 14 operates, the power input shaft 14 can drive the power output shaft 12 to rotate, and the rotation speed of the power output shaft 12 increases as the rotation speed of the power input shaft 14 increases. When the speed regulation power device 16 operates and the power input shaft 14 does not operate, the speed regulation power device 16 can drive the power output shaft 12 to rotate, and the rotation speed of the power output shaft 12 increases as the rotation speed of the speed regulation power device 16 increases.

In some embodiments, the rotation speed of the speed regulation power device 16 is regulated based on the rotation speed of the power input shaft 14.

Thus, the speed regulation power device 16 can be used to satisfy the rotation speed need of the power output shaft 12.

Specifically, the assist unit 100 may include a controller and a rotation speed sensor. The speed regulation power device 16 includes a speed regulation motor. The controller is electrically connected to the rotation speed sensor and the speed regulation motor. The rotation speed sensor is capable of detecting the rotation speed of the power input shaft 14 (such as a pedaling cadence of a pedal). The controller regulates the rotation speed of the speed regulation power device 16 based on the rotation speed of the power input shaft 14 to satisfy the rotation speed need of the power output shaft 12.

In some embodiments, the planetary gear transmission mechanism of the first transmission mechanism 20 includes the first sun gear 36, the first planet carrier 42, and the first ring gear 38. The planetary gear transmission mechanism of the second transmission mechanism 22 includes the second planet carrier 54.
(1) Let n1S1, n1R1, and n1C1 be rotation speeds of the first sun gear 36, the first ring gear 38, and the first planet carrier 42, respectively, and α1 be a tooth ratio or a pitch circle radius ratio between the first ring gear 38 and the first sun gear 36.
(2) Let TS1, TR1, and TC1 be torques of the first sun gear 36, the first ring gear 38, and the first planet carrier 42, respectively, and α1 be a tooth ratio or a pitch circle radius ratio between the first ring gear 38 and the first sun gear;
   Rotation speed relationship: n1S1+α1×n1R1=(1+α1)×n1C1;
   Torque relationship: TS1 : TR1 : TC1=1 : α1 : -(1+α1);

(a) Since the first ring gear 38 is connected to the power input shaft 14 through the transmission member 34 of the third transmission mechanism 44 and two transmission wheels 32, n1R1=V_{power input};
(b) The first sun gear 36 is connected to the output shaft of the speed regulation power device 16, therefore, n1S1=V_{speed regulation motor};
(c) Since the power input shaft 14 and the second planet carrier 54 of the second transmission mechanism 22 are connected through the fourth transmission mechanism 46 and the third transmission mechanism 44, TR1=T_{power input}+TC2, where TC2 is torque of the second planet carrier 54;
(d) Since the first planet carrier 42 is connected to the power output shaft 12, Vₒᵤₜₚᵤₜ=n1C1, Tₒᵤₜₚᵤₜ=TC1, and T_{speed regulation motor} =TS1.

Therefore, V_{speed regulation motor}+α1×V_{power input}=(1+α1)×V_{power output} (A);
$TS 1 : TR 1 : TC 1 = {T}_{speed regulation motor} : \left(TR1={T}_{power input}+TC2\right) : {T}_{output} = 1 : α 1 : - \left(1+α1\right)$

When the transmission connection through which the assist power device 18 drives the speed regulation power device 16 to rotate through the compensation transmission mechanism 24 is disconnected, the assist unit 100 is in the shifting mode. In the shifting mode, the rotation speed of the speed regulation power device 16 is adjustable. It can be learned from Formula A that when a needed rotation speed V_{power output} of the power output shaft 12 is fixed, the rotation speed V_{speed regulation motor} of the speed regulation power device 16 can be regulated based on the rotation speed V_{power input} of the power input shaft 14 to satisfy the rotation speed need of the power output shaft 12.

It should be understood that in some other embodiments, when the transmission mechanism uses other types of structures to realize power transmission, a mapping relationship among the rotation speed of the speed regulation power device 16, the rotation speed of the power input shaft 14, and the rotation speed of the power output shaft 12 can be established in combination with the above analysis process.

In some embodiments, torque of the power output shaft 12 increases as torque of the assist power device 18 and torque of the power input shaft 14 increase.

Thus, torque of the power output shaft 12 has a positive correlation relationship with torque of the assist power device 18 and torque of the power input shaft 14.

Specifically, in the drawings, the assist power device 18 may be connected to the power output shaft 12 through the second transmission mechanism 22, the fourth transmission mechanism 46, and the first transmission mechanism 20. In the illustrated embodiments, the output shaft of the assist power device 18 is connected to the second sun gear 48. The second planet carrier 54 is connected to the first ring gear 38 of the first transmission mechanism 20 through the fourth transmission mechanism 46. The first ring gear 38 is connected to the first planetary gear set 40, and the first planetary gear set 40 is connected to the power output shaft 12 through the first planet carrier 42. When the assist motor of the assist power device 18 operates, the assist motor can drive the output shaft of the assist power device 18 to rotate, thereby driving the second sun gear 48 to rotate. The second sun gear 48 drives the second planetary gear set 52 to rotate, causing the second planet carrier 54 and the first ring gear 38 to rotate, thereby driving the power output shaft 12 to rotate. The larger the torque of the assist motor, the more power is transmitted to the power output shaft 12 through the second transmission mechanism 22, the fourth transmission mechanism 46, and the first transmission mechanism 20, and the larger the torque of the power output shaft 12.

In the illustrated embodiments, the power input shaft 14 is connected to the power output shaft 12 through the third transmission mechanism 44 and the first transmission mechanism 20. Specifically, the power input shaft 14 is connected to the first ring gear 38 of the first transmission mechanism 20 through the third transmission mechanism 44. The first ring gear 38 is connected to the first planetary gear set 40, and the first planetary gear set 40 is connected to the power output shaft 12 through the first planet carrier 42. The power input shaft 14 receives torque input from the power input device 200 and drives the third transmission mechanism 44 to move, thereby driving the first ring gear 38 to rotate. The first ring gear 38 drives the first planetary gear set 40 to rotate, causing the first planet carrier 42 and the power output shaft 12 to rotate. The greater the torque of the power input shaft 14, the more power is transmitted to the power output shaft 12 through the third transmission mechanism 44 and the first transmission mechanism 20, and the greater the torque of the power output shaft 12.

When torque of the power input shaft 14 is insufficient, torque of the assist power device 18 can be used to provide assist power to the power output shaft 12.

In some embodiments, torque of the assist power device 18 is regulated based on torque of the power input shaft 14.

Thus, the assist power device 18 can be used to satisfy the torque need of the power output shaft 12.

Specifically, the assist unit 100 may include a controller and a torque sensor. The assist power device 18 includes an assist motor. The controller is electrically connected to the torque sensor and the assist motor. The torque sensor is capable of detecting torque of the power input shaft 14 (such as torque of a pedal). The controller regulates torque of the assist power device 18 based on torque of the power input shaft 14 to satisfy the torque need of the power output shaft 12.

In some embodiments, the planetary gear transmission mechanism of the second transmission mechanism 22 includes the second sun gear 48, the second planet carrier 54, and the second ring gear 50. The planetary gear transmission mechanism of the first transmission mechanism 20 includes the first planet carrier 42.

Let n2S2, n2R2, and n2C2 be rotation speeds of the second sun gear 48, the second ring gear 50, and the second planet carrier 54, respectively, and α_{body} be a tooth ratio or a pitch circle radius ratio between the second ring gear 50 and the second sun gear 48;
(2) Let TS2, TR2, and TC2 be torques of the second sun gear 48, the second ring gear 50, and the second planet carrier 54, respectively, and α_{body} be a tooth ratio or a pitch circle radius ratio between the second ring gear 50 and the second sun gear 48;
Rotation speed relationship: n2S2+α2×n2R2=(1+α2)×n2C2;
Torque relationship: TS2 : TR2 : TC2=1 : α2 : -(1+α2);

The second ring gear 50 is fixed, the second sun gear 48 is connected to the output shaft of the assist power device 18, and the second planet carrier 54 is connected to the first ring gear 38 of the first transmission mechanism 20 through the fourth transmission mechanism 46.
Therefore:
V_{assist motor}=n2S2;
T_{assist motor}=TS2;${V}_{assist motor} = n 2 S 2 = \left(1+α2\right) \times n 2 C 2 ;$${T}_{assist motor} : TC 2 = 1 : - \left(1+α2\right) ;$

It can be derived from the above that:
When V_{power input}>1/(1+α2)×V_{assist motor}, V_{speed regulation motor}+α1×V_{power input}=(1+α1)×Vₒᵤₜₚᵤₜ (A); or
When V_{power input}<1/(1+α2)×V_{assist motor}, V_{speed regulation motor}+α1×(1/(1+α2)×V_{assist motor})=(1+α1)×Vₒᵤₜₚᵤₜ (B1);
${T}_{speed regulation motor} : \left({T}_{power input}+\left(1+α2\right)\times {T}_{assist motor}\right) : {T}_{power output} = 1 : α 1 : - \left(1+α1\right)$

When the assist power device 18 is capable of driving the speed regulation power device 16 to rotate through the compensation transmission mechanism 24, the assist unit 100 is in the fixed gear mode. In the fixed gear mode, the rotation speed and torque of the speed regulation power device 16 are unchanged. It can be learned from Formula C that when torque T_{speed regulation motor} of the speed regulation power device 16 and needed torque T_{power output} of the power output shaft 12 are fixed, torque T_{assist motor} of the assist power device 18 can be regulated based on torque T_{power input} of the power input shaft 14 to satisfy the torque need of the power output shaft 12.

It should be understood that in some other embodiments, when the transmission mechanism uses other types of structures to realize power transmission, a mapping relationship among torque of the assist power device 18, torque of the power input shaft 14, and torque of the power output shaft 12 can be established in combination with the above analysis process.

In some embodiments, when the rotation speed of the assist motor is greater than or equal to the rotation speed of the power input shaft 14, since the power input shaft 14 to the assist motor is a mechanical connection with a fixed speed ratio, the power input shaft 14 is connected to the third transmission mechanism 44 through the clutch 56 (such as the one-way bearing 30). When the assist power device 18 provides assist power, the clutch 56 conducts the transmission connection through which the power input shaft 14 drives one component of the first transmission mechanism 20 (such as the first ring gear 38 or the like) to rotate through the third transmission mechanism 44. A rotation speed of the assist motor after speed reduction to the first ring gear 38 and a rotation speed of the power input shaft 14 after speed increase to the first ring gear 38 have the same magnitude and the same direction. When the power input device 200 suddenly stops inputting power (such as a person suddenly stopping pedaling), the rotation speed of the assist motor cannot immediately become zero. In this situation, the clutch 56 disconnects the transmission connection through which the power input shaft 14 drives one component of the first transmission mechanism 20 (such as the first ring gear 38 or the like) to rotate through the third transmission mechanism 44. The rotation speed of the assist motor is higher than the rotation speed of the power input shaft 14 (such as a pedaling cadence or the like), ensuring that the assist motor will not drag a foot to rotate and cause an undesirable experience.

In some embodiments, in the fixed gear mode, for example, when the clutch 56 of the switch device 28 conducts the transmission connection through which the assist power device 18 drives the speed regulation power device 16 to rotate through the compensation transmission mechanism 24, and at a low vehicle speed, the assist power device 18 can compensate torque to the speed regulation power device 16 through the compensation transmission mechanism 24 and can also compensate for insufficient torque of the power input shaft 14 at the first ring gear 38 through the fourth transmission mechanism 46. In the shifting mode, for example, when the clutch 56 of the switch device 28 disconnects the transmission connection through which the assist power device 18 drives the speed regulation power device 16 to rotate through the compensation transmission mechanism 24, and at a high vehicle speed, the assist power device 18 can compensate for insufficient torque of the power input shaft 14 at the first ring gear 38 through the fourth transmission mechanism 46. In this situation, torque of the speed regulation power device 16 and torque of the assist power motor can satisfy system needs.

In the illustrated embodiments, the first transmission mechanism 20 and the second transmission mechanism 22 both include planetary gear transmission mechanisms. A rotation direction relationship among the power input shaft 14, the power output shaft 12, the first transmission mechanism 20, and components of the second transmission mechanism 22 is shown in the following table.

| Component | | Rotation Direction |
|---|---|---|
| Power Input Shaft 14 | | Forward |
| First Transmission Mechanism 20 | First Sun Gear 36 | Forward |
| | First Ring Gear 38 | Forward |
| | First Planet Carrier 42 | Forward |
| Second Transmission Mechanism 22 | Second Sun Gear 48 | Forward |
| | Second Ring Gear 50 | Fixed |
| | Second Planet Carrier 54 | Forward |
| Power Output Shaft 12 | | Forward |

Specific rotation directions of forward and reverse can be determined according to needs and are not limited herein. It should be understood that in some other embodiments, by increasing or decreasing the number of components and/or changing the structure, the above rotation relationships may change, and the present disclosure is not limited to the rotation relationships shown in the above table.

In some embodiments, the power input shaft 14 and the power output shaft 12 are arranged spaced apart in a direction perpendicular to the power output shaft 12.

Thus, spatial arrangement of other components of the assist unit 100 can be conveniently configured.

Specifically, the power output shaft 12 is configured to output power, and the power input shaft 14 is configured to receive power input from the power input device 200 and transmit the power to the power output shaft 12. The power input shaft 14 and the power output shaft 12 are arranged spaced apart in a direction perpendicular to the power output shaft 12, so that other components of the assist unit 100 can be spatially arranged according to positions of the power input shaft 14 and the power output shaft 12, which is beneficial to improving assembly efficiency.

In some embodiments, the speed regulation power device 16 is connected to the power output shaft 12 through the first transmission mechanism 20, and the assist power device 18 is connected to the first transmission mechanism 20 through the second transmission mechanism 22. Thus, positions of the speed regulation power device 16, the assist power device 18, the first transmission mechanism 20, and the second transmission mechanism 22 can be arranged according to positions of the power output shaft 12 and the power input shaft 14.

In some embodiments, an extending direction of the power input shaft 14 is substantially parallel to an extending direction of the power output shaft 12.

Thus, a structurally compact assist unit 100 can be realized, which is beneficial to miniaturized design of the assist unit 100.

Specifically, the extending direction of the power input shaft 14 being substantially parallel to the extending direction of the power output shaft 12 enables the assist power device 18 and the second transmission mechanism 22 to be arranged along the extending direction of the power input shaft 14, and enables the speed regulation power device 16 and the first transmission mechanism 20 to be arranged along the extending direction of the power output shaft 12.

Optionally, the assist power device 18 and at least some components of the second transmission mechanism 22 are sleeved on the power input shaft 14, and the speed regulation power device 16 and the first transmission mechanism 20 are arranged along the extending direction of the power output shaft 12.

When the extending direction of the power input shaft 14 is substantially parallel to the extending direction of the power output shaft 12, other components of the assist unit 100 can be arranged along two mutually parallel positions, so that the structural arrangement of the assist unit 100 becomes more orderly and a compact assist unit 100 can be realized, which is beneficial to miniaturized design of the assist unit 100.

In some embodiments, the power input device 200 is coaxially connected to the power input shaft 14.

Thus, a structurally compact assist unit 100 can be realized, which is beneficial to miniaturized design of the assist unit 100.

Specifically, the power input device 200 being coaxially connected to the power input shaft 14 can reduce space occupied in a direction perpendicular to the extending direction of the power input shaft 14 caused by eccentric connection between the power input device 200 and the power input shaft 14. Thus, a structurally compact assist unit 100 can be realized, which is beneficial to miniaturized design of the assist unit 100.

Coaxial connection between the power input device 200 and the power input shaft 14 also facilitates connection between the power input device 200 and the power input shaft 14.

In some embodiments, the power input device 200 includes at least one of the following: a motor, an engine, and a pedal crank mechanism.

Thus, the assist unit 100 has a relatively wide range of applications.

Specifically, in some embodiments, the power input device 200 includes a motor, an engine, and a pedal crank mechanism. An output shaft of the motor can be connected to the power input shaft 14. The motor consumes electrical energy so that the output shaft of the motor rotates, thereby driving the power input shaft 14 to rotate and realizing power input. The motor may be applied to, but is not limited to, electric assist bicycles, electric motorcycles, and electric vehicles.

An output shaft of the engine can be connected to the power input shaft 14. The engine consumes fuel so that the output shaft of the engine rotates, thereby driving the power input shaft 14 to rotate and realizing power input. The engine may be applied to, but is not limited to, electric assist bicycles, electric motorcycles, and electric vehicles.

A crankshaft of the pedal crank mechanism can be connected to the power input shaft 14. A rider can pedal a pedal connected to the crankshaft so that the crankshaft of the pedal crank mechanism rotates, thereby driving the power input shaft 14 to rotate and realizing power input. The pedal crank mechanism may be applied to, but is not limited to, bicycles, tricycles, or the like.

In some embodiments, the power input device 200 includes any one or any two of a motor, an engine, and a pedal crank mechanism.

In some embodiments, the power input device 200 is fixedly connected to the power input shaft 14.

Thus, transmission efficiency can be improved, the structure of the assist unit 100 can be simplified, and miniaturized design of the assist unit 100 is facilitated.

Specifically, fixed connection between the power input device 200 and the power input shaft 14 can eliminate a connection mechanism needed for movable connection between the power input device 200 and the power input shaft 14. Generally, the number of components needed for movable connection is greater than that needed for fixed connection, and the structure of movable connection is more complex than that of fixed connection.

Fixed connection between the power input device 200 and the power input shaft 14 can reduce power loss caused by movable connection between the power input device 200 and the power input shaft 14. Generally, during movable connection, components of a connection mechanism produce relative motion causing friction loss, and additional power loss occurs due to tolerances generated when components of the connection mechanism are movably connected.

Methods for fixedly connecting the power input device 200 and the power input shaft 14 include but are not limited to welding, snap connection, bolt connection, or the like.

In some embodiments, the speed regulation power device 16 includes at least one of the following: a motor and an engine.

Thus, the assist unit 100 has a relatively wide range of applications.

Specifically, in some embodiments, the speed regulation power device 16 includes a motor and an engine. An output shaft of the motor can serve as the output shaft of the speed regulation power device 16 and be connected to the first transmission mechanism 20. The motor consumes electrical energy so that the output shaft of the motor rotates, thereby driving the first transmission mechanism 20 to move and driving the power output shaft 12 to rotate to realize gear shifting.

An output shaft of the engine can serve as the output shaft of the speed regulation power device 16 and be connected to the first transmission mechanism 20. The engine consumes fuel so that the output shaft of the engine rotates, thereby driving the first transmission mechanism 20 to move and driving the power output shaft 12 to rotate to realize gear shifting.

In some other embodiments, the speed regulation power device 16 includes a motor or an engine.

In some embodiments, the assist power device 18 includes at least one of the following: a motor and an engine.

Thus, the assist unit 100 has a relatively wide range of applications.

Specifically, in some embodiments, the assist power device 18 includes a motor and an engine. An output shaft of the motor can serve as the output shaft of the assist power device 18 and be connected to the second transmission mechanism 22 and the compensation transmission mechanism 24. The motor consumes electrical energy so that the output shaft of the motor rotates, thereby driving the second transmission mechanism 22 and the compensation transmission mechanism 24 to move, providing assist power to the power output shaft 12 and, when related information of power to be output of the speed regulation power device 16 exceeds a preset threshold, the motor drives the speed regulation power device 16 to rotate through the compensation transmission mechanism 24.

An output shaft of the engine can serve as the output shaft of the assist power device 18 and be connected to the second transmission mechanism 22 and the compensation transmission mechanism 24. The engine consumes fuel so that the output shaft of the engine rotates, thereby driving the second transmission mechanism 22 and the compensation transmission mechanism 24 to move, providing assist power to the power output shaft 12 and, when related information of power to be output of the speed regulation power device 16 exceeds a preset threshold, the engine drives the speed regulation power device 16 to rotate through the compensation transmission mechanism 24.

In some other embodiments, the assist power device 18 includes a motor or an engine.

In some embodiments, a vehicle to which the assist unit 100 is applied is an electric assist bicycle, an electric motorcycle, or an electric vehicle.

Thus, the vehicle has a relatively wide range of applications.

Specifically, in some embodiments, the vehicle is an electric assist bicycle. The assist unit 100 may be installed on a frame, the power input shaft 14 is connected to a crank, and the power output shaft 12 is connected to a rear wheel of the electric assist bicycle. In the fixed gear mode, the assist power device 18 is capable of driving the speed regulation power device 16 to rotate through the compensation transmission mechanism 24 to mitigate or eliminate soft pedal feel when stepping on a pedal caused by insufficient output of the speed regulation power device 16. In the shifting mode, the speed regulation power device 16 can regulate the rotation speed of the power output shaft 12, thereby realizing continuously variable transmission to mitigate or eliminate jerking sensations during gear switching.

In some embodiments, the vehicle is an electric motorcycle. The assist unit 100 may be installed on a frame, the power input shaft 14 is connected to an output shaft of a motor, and the power output shaft 12 is connected to a rear wheel of the electric motorcycle. In the fixed gear mode, the assist power device 18 is capable of driving the speed regulation power device 16 to rotate through the compensation transmission mechanism 24 to mitigate or eliminate soft pedal feel when stepping on a throttle caused by insufficient output of the speed regulation power device 16. In the shifting mode, the speed regulation power device 16 can regulate the rotation speed of the power output shaft 12, thereby realizing continuously variable transmission to mitigate or eliminate jerking sensations during gear switching.

In some embodiments, the vehicle is an electric vehicle. The assist unit 100 may be installed on a vehicle body, the power input shaft 14 is connected to an output shaft of a drive motor of the vehicle, and the power output shaft 12 is connected to a drive wheel of the electric vehicle (such as a rear wheel and/or a front wheel, or the like). In the fixed gear mode, the assist power device 18 is capable of driving the speed regulation power device 16 to rotate through the compensation transmission mechanism 24 to mitigate or eliminate soft pedal feel when stepping on a throttle caused by insufficient output of the speed regulation power device 16. In the shifting mode, the speed regulation power device 16 can regulate the rotation speed of the power output shaft 12, thereby realizing continuously variable transmission to mitigate or eliminate jerking sensations during gear switching.

In a second aspect, embodiments of the present disclosure provide a vehicle.

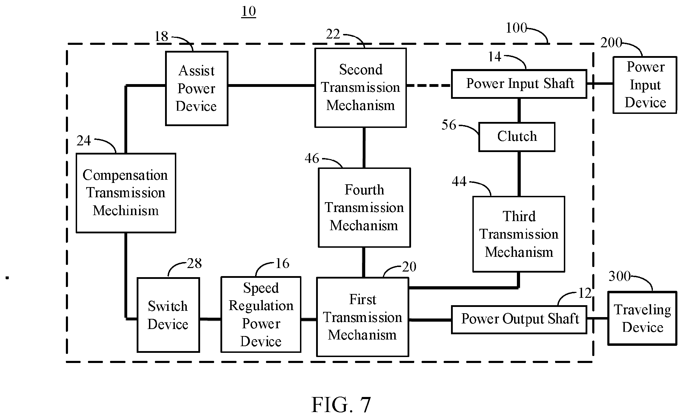

Referring also to FIG. 7, the vehicle 10 of embodiments of the present disclosure includes:
a power input device 200; and
the assist unit 100 according to any of the above embodiments, connected to the power input device 200 and configured to regulate power input from the power input device 200.

It should be noted that the vehicle may be a land mobile device, for example, an automobile, an electric assist bicycle, an electric motorcycle, or the like. The vehicle may also be a water mobile device, for example, a personal watercraft, an assault boat, or the like. The vehicle may also be an air mobile device, for example, an unmanned aerial vehicle or the like, a manned aircraft or the like. The vehicle may also be an underwater mobile device, for example, an unmanned underwater vehicle or the like.

In some embodiments, the vehicle 10 further includes a traveling device 300. The traveling device 300 is drivingly connected to the power output shaft 12 of the assist unit 100. The power output shaft 12 of the assist unit 100 drives a power execution component of the traveling device 300 to rotate, thereby driving the vehicle to move. For example, the traveling device 300 may be a wheel, a propeller, or the like.

It should be noted that the above explanations of embodiments and beneficial effects of the assist unit 100 are also applicable to the vehicle of the present embodiment, and to avoid redundancy, details are not described here.

In the description of the disclosure, descriptions with reference terms such as "one embodiment," "some embodiments," "exemplary embodiment," "example," "specific example," or "some examples" mean that specific features, structures, materials, or characteristics described in conjunction with the embodiments or examples are included in at least one embodiment or example of the present disclosure. In the specification, schematic representations of the above terms do not necessarily refer to the same embodiment or example. Moreover, the described specific features, structures, materials, or characteristics may be combined in a suitable manner in any one or more embodiments or examples.

Although embodiments of the present disclosure have been shown and described, a person of ordinary skill in the art can understand that various changes, modifications, substitutions, and variations can be made to these embodiments without departing from principles and spirit of the present disclosure. The scope of the present application is defined by the claims and equivalents thereof.

## Claims

1. An assist unit comprising:
a power output shaft configured to output power;
a power input shaft configured to receive power input from a power input device and transmit power to the power output shaft;
a speed regulation power device connected to the power output shaft through a first transmission mechanism and configured to regulate a rotation speed of the power output shaft; and
an assist power device connected to the first transmission mechanism through a second transmission mechanism and configured to provide assist power to the power output shaft;
wherein the assist power device is connected to the speed regulation power device through a compensation transmission mechanism;
when related information of power to be output of the speed regulation power device exceeds a preset threshold, the assist power device drives the speed regulation power device to rotate through the compensation transmission mechanism.

2. The assist unit according to claim 1, wherein the related information of power to be output of the speed regulation power device includes at least one of: a magnitude of torque to be output of the speed regulation power device, a magnitude of power to be output of the speed regulation power device, or a magnitude of energy to be supplied of the speed regulation power device.

3. The assist unit according to claim 2, wherein the magnitude of energy to be supplied of the speed regulation power device includes: a magnitude of current to be supplied of the speed regulation power device.

4. The assist unit according to claim 1, wherein the related information of power to be output of the speed regulation power device exceeding the preset threshold includes at least one of:
the torque to be output of the speed regulation power device being greater than a preset torque threshold;
the power to be output of the speed regulation power device being greater than a preset power threshold; or
the current to be supplied of the speed regulation power device being greater than a preset current threshold.

5. The assist unit according to claim 1, wherein an operating mode of the assist unit includes a shifting mode and a fixed gear mode, when the assist power device drives the speed regulation power device to rotate through the compensation transmission mechanism, the assist unit is in the fixed gear mode; when a transmission connection through which the assist power device drives the speed regulation power device to rotate through the compensation transmission mechanism is disconnected, the assist unit is in the shifting mode.

6. The assist unit according to claim 5, wherein in response to the assist unit satisfying a preset condition, the assist unit switches from the fixed gear mode to the shifting mode.

7. The assist unit according to claim 6, wherein the response to the assist unit satisfying the preset condition includes: in response to an operating state of the speed regulation power device satisfying a preset condition.

8. The assist unit according to claim 7, wherein the response to the operating state of the speed regulation power device satisfying the preset condition includes at least one of: in response to output torque of the speed regulation power device being less than or equal to a preset torque value, or in response to a rotation speed of the speed regulation power device being greater than or equal to a preset speed value.

9. The assist unit according to claim 6, further comprising:
a switch device configured to conduct or disconnect a transmission connection through which the assist power device drives the speed regulation power device to rotate through the compensation transmission mechanism.

10. The assist unit according to claim 9, wherein the switch device includes a clutch, in response to the assist unit satisfying the preset condition, the clutch automatically disconnects the transmission connection through which the assist power device drives the speed regulation power device to rotate through the compensation transmission mechanism.

11. The assist unit according to claim 10, wherein the clutch includes a one-way bearing.

12. The assist unit according to claim 11, wherein the one-way bearing is connected to an output shaft of the speed regulation power device, and the compensation transmission mechanism is connected to the power input shaft through the one-way bearing.

13. The assist unit according to claim 5, wherein when the assist unit is in the fixed gear mode, a transmission ratio between power input and power output of the assist unit is a constant value.

14. The assist unit according to claim 5, wherein when the assist unit is in the shifting mode, a transmission ratio between power input and power output of the assist unit changes with a rotation speed of the speed regulation power device.

15. The assist unit according to claim 14, wherein when the assist unit is in the shifting mode, a gear of the assist unit increases as the rotation speed of the speed regulation power device increases.

16. The assist unit according to claim 1, wherein the compensation transmission mechanism includes at least one of: a mechanical transmission mechanism, a hydraulic transmission mechanism, a magnetic transmission mechanism, a hydrodynamic transmission mechanism, or an electromagnetic transmission mechanism.

17. The assist unit according to claim 16, wherein the mechanical transmission mechanism includes at least one of: a gear transmission mechanism, a wheel transmission mechanism, or a worm-gear transmission mechanism.

18. The assist unit according to claim 17, wherein the wheel transmission mechanism includes two transmission wheels and a connection member, one transmission wheel being connected to the output shaft of the speed regulation power device, another transmission wheel being connected to the output shaft of the assist power device, and the connection member being connected to the two transmission wheels to drive the two transmission wheels to rotate together.

19. The assist unit according to claim 18, wherein the transmission wheel includes at least one of: a pulley or a sprocket;
the connection member includes at least one of: a belt or a chain.

20. The assist unit according to claim 1, wherein the first transmission mechanism includes a gear transmission mechanism including multiple gear members, an output shaft of the speed regulation power device being connected to one gear member, and the power output shaft being connected to another gear member.

21. The assist unit according to claim 20, wherein the gear transmission mechanism includes a planetary gear transmission mechanism including a sun gear, a ring gear, a planetary gear set, and a planet carrier, the sun gear being disposed within the ring gear, the planetary gear set being disposed between an inner ring of the ring gear and an outer ring of the sun gear and meshing with both the ring gear and the sun gear, and the planet carrier being connected to a middle portion of planetary gears of the planetary gear set.

22. The assist unit according to claim 21, wherein the planetary gear set includes multiple groups of planetary gears, one group meshing with the sun gear and another group meshing with the ring gear.

23. The assist unit according to claim 22, wherein a number of teeth of one group of planetary gears is the same as or different from a number of teeth of another group of planetary gears.

24. The assist unit according to claim 21, wherein an output shaft of the speed regulation power device is connected to the sun gear or the planet carrier.

25. The assist unit according to claim 21, wherein the power output shaft is connected to the planet carrier or the sun gear.

26. The assist unit according to claim 21, wherein the ring gear is connected to the power input shaft through a third transmission mechanism.

27. The assist unit according to claim 26, wherein one of the sun gear and the planet carrier is connected to the output shaft of the speed regulation power device and the other is connected to the power output shaft.

28. The assist unit according to claim 26, wherein the ring gear is connected to the second transmission mechanism through a fourth transmission mechanism.

29. The assist unit according to claim 1, wherein the second transmission mechanism includes a gear transmission mechanism including multiple gear members, an output shaft of the assist power device being connected to one gear member, and the first transmission mechanism being connected to another gear member.

30. The assist unit according to claim 29, wherein the gear transmission mechanism includes a planetary gear transmission mechanism including a sun gear, a ring gear, a planetary gear set, and a planet carrier, the sun gear being disposed within the ring gear, the planetary gear set being disposed between an inner ring of the ring gear and an outer ring of the sun gear and meshing with both the ring gear and the sun gear, and the planet carrier being connected to a middle portion of planetary gears of the planetary gear set.

31. The assist unit according to claim 30, wherein the planetary gear set includes multiple groups of planetary gears, one group meshing with the sun gear and another group meshing with the ring gear.

32. The assist unit according to claim 31, wherein a number of teeth of one group of planetary gears is the same as or different from a number of teeth of another group of planetary gears.

33. The assist unit according to claim 30, wherein an output shaft of the assist power device is connected to the sun gear or the planet carrier.

34. The assist unit according to claim 30, wherein the first transmission mechanism is connected to the planet carrier or the sun gear.

35. The assist unit according to claim 30, wherein the ring gear is fixed and does not rotate.

36. The assist unit according to claim 35, wherein one of the sun gear and the planet carrier is connected to the output shaft of the assist power device, and the other is connected to the first transmission mechanism.

37. The assist unit according to claim 1, further comprising:
a third transmission mechanism, the power input shaft driving one component of the first transmission mechanism to rotate through the third transmission mechanism.

38. The assist unit according to claim 37, wherein the third transmission mechanism includes at least one of: a mechanical transmission mechanism, a hydraulic transmission mechanism, a magnetic transmission mechanism, a hydrodynamic transmission mechanism, or an electromagnetic transmission mechanism.

39. The assist unit according to claim 38, wherein the mechanical transmission mechanism includes at least one of: a gear transmission mechanism, a wheel transmission mechanism, or a worm-gear transmission mechanism.

40. The assist unit according to claim 39, wherein the wheel transmission mechanism includes two transmission wheels and a transmission member, one transmission wheel being connected to the power input shaft, another transmission wheel being connected to the first transmission mechanism, and the transmission member being connected to the two transmission wheels to drive the two transmission wheels to rotate together.

41. The assist unit according to claim 40, wherein the transmission wheel includes at least one of: a pulley or a sprocket;
the transmission member includes at least one of: a belt or a chain.

42. The assist unit according to claim 1, further comprising:
a fourth transmission mechanism, the second transmission mechanism driving one component of the first transmission mechanism to rotate through the fourth transmission mechanism.

43. The assist unit according to claim 42, wherein the fourth transmission mechanism includes at least one of: a mechanical transmission mechanism, a hydraulic transmission mechanism, a magnetic transmission mechanism, a hydrodynamic transmission mechanism, or an electromagnetic transmission mechanism.

44. The assist unit according to claim 43, wherein the mechanical transmission mechanism includes at least one of: a gear transmission mechanism, a wheel transmission mechanism, or a worm-gear transmission mechanism.

45. The assist unit according to claim 44, wherein the wheel transmission mechanism includes two transmission wheels and a transmission member, one transmission wheel being connected to the second transmission mechanism, another transmission wheel being connected to the first transmission mechanism, and the transmission member being connected to the two transmission wheels to drive the two transmission wheels to rotate together.

46. The assist unit according to claim 45, wherein the transmission wheel includes at least one of: a pulley or a sprocket;
the transmission member includes at least one of: a belt or a chain.

47. The assist unit according to claim 1, further comprising:
a clutch, the power input shaft driving one component of the first transmission mechanism to rotate through the third transmission mechanism, and the clutch being configured to disconnect or conduct a transmission connection through which the power input shaft drives one component of the first transmission mechanism to rotate through the third transmission mechanism.

48. The assist unit according to claim 47, wherein the clutch includes a one-way bearing.

49. The assist unit according to claim 48, wherein the one-way bearing is connected to the power input shaft, and the third transmission mechanism is connected to the power input shaft through the one-way bearing.

50. The assist unit according to claim 48, wherein when a speed of the third transmission mechanism is greater than a speed of the power input shaft, the one-way bearing disconnects the transmission connection through which the power input shaft drives one component of the first transmission mechanism to rotate through the third transmission mechanism.

51. The assist unit according to claim 1, wherein an output shaft of the assist power device is a hollow shaft, and the power input shaft passes through the output shaft of the assist power device.

52. The assist unit according to claim 51, wherein the output shaft of the assist power device is capable of rotating relative to the power input shaft.

53. The assist unit according to claim 52, wherein a bearing is disposed between the output shaft of the assist power device and the power input shaft.

54. The assist unit according to claim 1, wherein the assist power device and at least part of components of the second transmission mechanism are arranged along an extending direction of the power input shaft.

55. The assist unit according to claim 54, wherein at least part of the components of the second transmission mechanism are sleeved on the power input shaft.

56. The assist unit according to claim 54, wherein the assist power device is sleeved on the power input shaft.

57. The assist unit according to claim 54, wherein the output shaft of the assist power device and the power input shaft are coaxially arranged.

58. The assist unit according to claim 1, wherein the speed regulation power device and at least part of components of the first transmission mechanism are arranged along an extending direction of the power output shaft.

59. The assist unit according to claim 58, wherein at least part of the components of the first transmission mechanism are sleeved on an extension line of the power output shaft.

60. The assist unit according to claim 58, wherein an output shaft of the speed regulation power device and the power output shaft are coaxially arranged.

61. The assist unit according to claim 1, wherein a rotation speed of the power output shaft increases as a rotation speed of the speed regulation power device and/or a rotation speed of the power input shaft increases.

62. The assist unit according to claim 61, wherein the rotation speed of the speed regulation power device is regulated based on the rotation speed of the power input shaft.

63. The assist unit according to claim 1, wherein torque of the power output shaft increases as torque of the assist power device and torque of the power input shaft increase.

64. The assist unit according to claim 63, wherein torque of the assist power device is regulated based on torque of the power input shaft.

65. The assist unit according to claim 1, wherein the power input shaft and the power output shaft are arranged spaced apart in a direction perpendicular to the power output shaft.

66. The assist unit according to claim 65, wherein an extending direction of the power input shaft is substantially parallel to an extending direction of the power output shaft.

67. The assist unit according to claim 1, further comprising:
a power input device, the power input device being coaxially connected to the power input shaft.

68. The assist unit according to claim 67, wherein the power input device includes at least one of: a motor, an engine, or a pedal crank mechanism.

69. The assist unit according to claim 67, wherein the power input device is fixedly connected to the power input shaft.

70. The assist unit according to claim 1, wherein the speed regulation power device includes at least one of: a motor or an engine.

71. The assist unit according to claim 1, wherein the assist power device includes at least one of: a motor or an engine.

72. The assist unit according to claim 1, wherein a vehicle to which the assist unit is applied is an electric assist bicycle, an electric motorcycle, or an electric vehicle.

73. A vehicle comprising:
a power input device; and
the assist unit according to any one of claims 1-72, the assist unit being connected to the power input device and configured to regulate power input from the power input device.
